(19) Europäisches Patentamt
European Patent Office
Office européen des brevets

(11) **EP 3 496 288 A1**

(12) **EUROPEAN PATENT APPLICATION**
published in accordance with Art. 153(4) EPC

(43) Date of publication:
**12.06.2019 Bulletin 2019/24**

(51) Int Cl.:
**H04B 7/02** *(2018.01)*

(21) Application number: **17838817.9**

(22) Date of filing: **11.08.2017**

(86) International application number:
**PCT/CN2017/097146**

(87) International publication number:
**WO 2018/028687 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.08.2016 CN 201610665881**
**30.09.2016 CN 201610879250**

(71) Applicant: **Huawei Technologies Co., Ltd.**
**Longgang District**
**Shenzhen, Guangdong 518129 (CN)**

(72) Inventors:
• **LIANG, Jinyao**
**Shenzhen**
**Guangdong 518129 (CN)**
• **WANG, Ting**
**Shenzhen**
**Guangdong 518129 (CN)**
• **LI, Yuanjie**
**Shenzhen**
**Guangdong 518129 (CN)**

(74) Representative: **Pfenning, Meinig & Partner mbB**
**Patent- und Rechtsanwälte**
**Joachimsthaler Straße 10-12**
**10719 Berlin (DE)**

(54) **METHOD AND DEVICE FOR CHANNEL STATE FEEDBACK**

(57) Embodiments of this application provide a CSI feedback method and apparatus. The method includes: receiving, by user equipment, M groups of channel state information (CSI) configuration information from a network device, where M is an integer greater than or equal to 1, the M groups of CSI configuration information include CSI configuration information corresponding to a serving cell of the user equipment; and feeding back, by the user equipment based on the CSI configuration information, N groups of CSI in M groups of CSI corresponding to the M groups of CSI configuration information; where N is an integer greater than or equal to 0 but not greater than M. The method can reduce CSI feedback overheads while improving CSI feedback efficiency.

```
┌─────────────────────────────────────────────┐
│ User equipment receives M groups of CSI      │      S101
│ configuration information from a network      │⌐
│ device, where M is an integer greater than    │
│ or equal to 1                                 │
└─────────────────────────────────────────────┘
                      │
                      ▼
┌─────────────────────────────────────────────┐
│ The user equipment feeds back, based on the  │      S102
│ CSI configuration information, N groups of CSI│⌐
│ in M groups of CSI corresponding to the M     │
│ groups of CSI configuration information, where│
│ N is an integer greater than or equal to 0    │
│ but not greater than M                        │
└─────────────────────────────────────────────┘
                      │
                      ▼
┌ ─ ─ ─ ─ ─ ─ ─ ─ ─ ─ ─ ─ ─ ─ ─ ─ ─ ─ ─ ─ ─ ┐
  The user equipment feeds back indication           S303
│ information, where the indication information│⌐
  is used to indicate N groups of CSI
│ configuration information corresponding to   │
  the N groups of CSI fed back by the user
│ equipment                                    │
└ ─ ─ ─ ─ ─ ─ ─ ─ ─ ─ ─ ─ ─ ─ ─ ─ ─ ─ ─ ─ ─ ┘
```

FIG. 1

**Description**

**TECHNICAL FIELD**

The present invention relates to the communications field, and in particular, to a channel state feedback method and apparatus.

**BACKGROUND**

A next-generation mobile communications system requires high-capacity and high-quality data transmission. A multiple-input multiple-output (MIMO) technology is considered as one of key technologies that can implement future high-speed data transmission, and has a high probability of being widely used in a fourth generation (4G) mobile communications system and a fifth generation (5G) mobile communications system. A plurality of transmit antennas of a conventional co-located MIMO system are integrated at a base station (BS) end. Different from the co-located MIMO, a distributed MIMO system includes a plurality of transmit antennas distributed in different geographic locations. Each pair of transmit/receive links are more independent of each other. The distributed MIMO system has advantages such as high-capacity, low power consumption, better coverage, and low electromagnetic harm on a human body, and is considered as one of alternative solutions of the future wireless communications system. In the distributed MIMO, coordinated multipoint transmission/reception (CoMP, Coordinated Multipoint Transmission) in the prior art is considered as an effective method for resolving an inter-cell interference problem and improving a throughput of an edge user. In the CoMP technology, a plurality of neighboring cells may jointly process or coordinate the edge user to avoid the interference and increase the throughput of the edge user.

In the CoMP technology, coordination results in exchange of signaling, and how to improve resource utilization and reduce waste of signaling resources during coordination is an urgent problem that needs to be resolved in current research.

**SUMMARY**

Embodiments of the present invention provide a channel state feedback method and apparatus to reduce channel state feedback overheads, and improve channel state feedback efficiency.

According to a first aspect, an embodiment of the present invention provides a channel state feedback method, including:

receiving, by user equipment, M groups of channel state information (CSI) configuration information from a network device, where M is an integer greater than or equal to 1, the M groups of CSI configuration information include CSI configuration information corresponding to a serving cell of the user equipment, or the M groups of CSI configuration information do not include CSI configuration information corresponding to a serving cell of the user equipment; and feeding back, by the user equipment based on the CSI configuration information, N groups of CSI in M groups of CSI corresponding to the M groups of CSI configuration information; where when the M groups of CSI configuration information include the CSI configuration information corresponding to the serving cell of the user equipment, N is an integer greater than or equal to 1 but not greater than M, and the N groups of CSI includes at least CSI corresponding to the CSI configuration information of the serving cell; or when the M groups of CSI configuration information do not include the CSI configuration information corresponding to the serving cell of the user equipment, the N groups of CSI do not include CSI corresponding to the CSI configuration information of the serving cell, and N is an integer greater than or equal to 0 but not greater than M.

Optionally, each group of CSI configuration information includes at least one of an identifier of a cell, an identifier (ID) of a CSI process, or an identifier of a set of non-zero power reference signal resources. The cell is associated with the user equipment. The associated cell includes the serving cell of the user equipment or a cell coordinating with the serving cell of the user equipment. The CSI process is corresponding to the identifier of the set of non-zero power reference signal resources.

Optionally, the method further includes: feeding back, by the user equipment, indication information, where the indication information is used to indicate N groups of CSI configuration information corresponding to the N groups of CSI fed back by the user equipment.

Optionally, the method further includes: receiving, by the user equipment from the network device, information indicating a type of each group of CSI. Optionally, the information indicating the type of each group of CSI may be predefined, or carried in the CSI configuration information, or carried in other RRC signaling or physical layer signaling.

Optionally, the method further includes: receiving, by the user equipment from the network device, information indicating a quantity of CSI included in each group of CSI. Optionally, the information indicating the quantity of CSI included in each group of CSI may be predefined, or carried in the CSI configuration information, or carried in other RRC signaling or physical layer signaling.

According to a second aspect, an embodiment of the present invention provides a channel state feedback method, including:

sending, by a network device, M groups of channel state information (CSI) configuration information to user equipment, where M is an integer greater than or equal to 1, the M groups of CSI configuration information include CSI configuration information corresponding to a serving cell of the user equipment, or the M groups of CSI configuration information do not include CSI configuration information corresponding to a serving cell of the user equipment; and receiving, by the network device from the user equipment, N groups of CSI in M groups of CSI corresponding to the M groups of CSI configuration information; where
when the M groups of CSI configuration information include the CSI configuration information corresponding to the serving cell of the user equipment, N is an integer greater than or equal to 1 but not greater than M; or
when the M groups of CSI configuration information do not include the CSI configuration information corresponding to the serving cell of the user equipment, the N groups of CSI do not include CSI corresponding to the CSI configuration information of the serving cell, and N is an integer greater than or equal to 0 but not greater than M.

Optionally, the method further includes:
receiving indication information from the user equipment, where the indication information is used to indicate N groups of CSI configuration information corresponding to the N groups of CSI fed back by the user equipment. Optionally, the method further includes: sending, by the network device to the network device, information used to indicate a type of each group of CSI. Optionally, the information used to indicate the type of each group of CSI may be predefined, or carried in the CSI configuration information, or carried in other RRC signaling or physical layer signaling.

Optionally, the method further includes: sending, by the network device to the user equipment, information used to indicate a quantity of CSI included in each group of CSI. Optionally, the information about the quantity of CSI included in each group of CSI may be predefined, or carried in the CSI configuration information, or carried in other RRC signaling or physical layer signaling.

According to the method in the first aspect or the second aspect,
optionally, the type of each group of CSI includes a rank indicator (RI) and/or precoding matrix information (PMI); or the type of each group of CSI includes channel quality information (CQI) and a rank indicator and/or precoding matrix information.

Optionally, the indication information includes M groups of bits, each group of bits includes at least one bit, and each group of bits indicates whether CSI corresponding to one group of CSI configuration information in the M groups of CSI configuration information is fed back by the user equipment.

Optionally, when the M groups of CSI configuration information include the CSI configuration information corresponding to the serving cell of the user equipment, the indication information includes M-1 groups of bits, each group of bits includes at least one bit, and each group of bits indicates whether CSI corresponding to one group of CSI configuration information in M-1 groups of CSI configuration information other than the CSI configuration information of the serving cell in the M groups of CSI configuration information is fed back by the user equipment.

Optionally, the N groups of CSI are fed back in a preset sequence, and the preset sequence is related to a sequence of the M groups of bits; or the N groups of CSI are fed back by being carried in N groups of resources in M groups of resources corresponding to the M groups of CSI, a sequence of the M groups of resources for the M groups of CSI is related to the sequence of the M groups of bits, and a resource other than the resources that are used to carry the N groups of CSI in the M groups of resources is not used to carry CSI.

Optionally, the N groups of CSI are fed back in a preset sequence, and the preset sequence is related to a sequence of the M-1 groups of bits; or the N groups of CSI are fed back by being carried in N groups of resources in M-1 groups of resources corresponding to M-1 groups of CSI, a sequence of the M-1 groups of resources for the M-1 groups of CSI is related to the sequence of the M-1 groups of bits, and a resource other than the resources that are used to carry the N groups of CSI in the M-1 groups of resources is not used to carry CSI.

Optionally, a value of each group of bits indicates a quantity of CSI in one group of CSI corresponding to CSI configuration information corresponding to the group of bits.

Optionally, the quantity of CSI is determined based on a quantity of CSI that needs to be fed back in each group of CSI configuration information, and the quantity of CSI that needs to be fed back in each group of CSI configuration information is predefined or is configured by using higher layer signaling or physical layer signaling.

Optionally, the indication information includes identification information of each group of CSI configuration information corresponding to each group of CSI in the N groups of CSI.

Optionally, a feedback sequence of the N groups of CSI is related to a sequence of the identification information of the N groups of CSI configuration information corresponding to the N groups of CSI.

Optionally, the feeding back, by the user equipment based on the CSI configuration information, N groups of CSI in M groups of CSI corresponding to the M groups of CSI configuration information includes:

obtaining, by the user equipment, the corresponding M groups of CSI based on the M groups of CSI configuration information, and determining and feeding back the N groups of CSI in the M groups of CSI according to a determined rule.

Optionally, the determined rule includes one or a combination of the following manners:

Manner 1. The N groups of CSI in the M groups of CSI are determined and fed back by comparing each group of CSI in the M groups of CSI with a corresponding threshold.

Optionally, types of the groups of CSI are the same or different, and the type of the CSI indicates that each group of CSI includes one or a combination of an RI, a wideband or subband PMI, or CQI.

Optionally, the information indicating the type of each group of CSI is carried in the CSI configuration information.

Optionally, the network device is a network device to which the serving cell of the user equipment belongs.

Optionally, the M groups of CSI configuration information are carried in one CSI process, or carried in M CSI processes with each carrying one group of CSI configuration information, or carried in T CSI processes, where T is greater than 1 and less than or equal to M, and one of the T CSI processes includes at least two groups of CSI configuration information.

According to a third aspect, an embodiment of the present invention further provides an apparatus configured for wireless communication. Specifically, the apparatus may be configured for channel state feedback, and includes necessary function modules configured to implement the method provided in the first aspect. Specific division and description of the function modules are not described herein.

According to a fourth aspect, an embodiment of the present invention provides an apparatus configured for wireless communication. Specifically, the apparatus may be configured for channel state feedback, and includes necessary function modules configured to implement the method provided in the second aspect. Specific division and description of the function modules are not described herein.

According to a fifth aspect, an embodiment of the present invention provides a network device, including a transceiver, a processor, and a memory. The network device has a specific structure bearing the function modules in the fourth aspect.

The memory is configured to store a computer program instruction.

The processor is coupled to the memory, and is configured to read the computer program instruction stored in the memory and perform the method provided in the second aspect.

For a procedure executed by the processor, refer to the foregoing channel state feedback procedure. Details are not described herein again.

According to a sixth aspect, an embodiment of the present invention provides a terminal (user equipment), including a transceiver, a processor, and a memory. The user equipment has a specific structure bearing the function modules in the third aspect.

The memory is configured to store a computer program instruction.

The processor is coupled to the memory, and is configured to read the computer program instruction stored in the memory and perform the method provided in the first aspect.

According to a seventh aspect, an embodiment of the present invention further provides a program storage medium. The method provided in any possible implementation of the first aspect or the second aspect may be implemented when a program stored in the program storage medium is executed.

For a procedure executed by the processor, refer to the foregoing channel state information feedback procedure. Details are not described herein again.

An embodiment of the present invention further provides a resource configuration apparatus, and the resource configuration apparatus may be configured to perform the method in the first aspect or the second aspect.

An embodiment of the present invention provides a computer readable storage medium, including a computer program. When the computer program runs on a computer, a method in any possible implementation of the first aspect or the second aspect is performed.

The network device provided in this application has a function of implementing a network device behavior in the foregoing method aspects, and the network device includes corresponding components (means) configured to perform steps or functions described in the foregoing method aspects. The steps or functions may be implemented by using software or hardware or a combination of hardware and software.

In a possible design, the network device includes one or more processors and communications units. The one or more processors are configured to support the network device in performing corresponding functions in the foregoing method, for example, generating configuration information. The one or more communications units are configured to support the network device in communicating with other devices, so as to implement a receiving and/or a sending function, for example, sending the configuration information generated by the processor and/or receiving CSI.

Optionally, the network device may further include one or more memories. The memory is configured to couple to the processor and store necessary program instructions and data of the network device. The one or more memories and the processor may be integrated, or may be separately configured. This is not limited in this application.

The network device may be a base station or a TRP, and the communications unit may be a transceiver or a transceiver circuit.

The network device may be a communications chip. The communications unit may be an input/output circuit or an interface of the communications chip.

In another possible design, the network device includes a transceiver, a processor, and a memory. The processor is configured to control the transceiver to send and receive a signal. The memory is configured to store a computer program. The processor is configured to invoke, from the memory, and run the computer program, so that the network device performs the method performed by the network device in the second aspect or any possible implementation of the second aspect.

This application further provides an apparatus. The apparatus has a function of implementing a user equipment behavior in the foregoing method aspects. The apparatus includes corresponding components (means) configured to perform steps or functions described in the foregoing method aspects. The steps or functions may be implemented by using software or hardware or a combination of hardware and software.

In a possible design, the apparatus includes one or more processors and communications units. The one or more processors are configured to support the apparatus in performing corresponding functions in the foregoing method, for example, parsing configuration information. The one or more communications units are configured to support the apparatus in communicating with other devices, so as to implement a receiving and/or a sending function, for example, receiving the configuration information and/or sending CSI.

Optionally, the apparatus may further include one or more memories. The memory is configured to couple to the one or more processors and store necessary program instructions and data of the apparatus. The one or more memories and the one or more processors may be integrated, or may be separately configured. This is not limited in this application.

The apparatus may be an intelligent terminal or a wearable device, and the communications unit may be a transceiver or a transceiver circuit.

The apparatus may be a communications chip. The communications unit may be an input/output circuit or an interface of the communications chip.

In another possible design, the apparatus includes a transceiver, a processor, and a memory. The processor is configured to control the transceiver to send and receive a signal. The memory is configured to store a computer program. The processor is configured to invoke, from the memory, and run the computer program, so that the apparatus performs the method performed by the user equipment in the first aspect or any possible implementation of the first aspect.

In the foregoing embodiments of the present invention, the user equipment may not feed back all or some of CSI corresponding to all the received M groups of CSI configuration information, so as to reduce CSI feedback overheads.

The following explains some concepts in this application. It may be understood that for explanation of these concepts, reference may be further made to explanation in the prior art, and this is not limited herein.

CS/CB: When a current cell performs scheduling, scheduling results of the current cell and a neighboring cell are coordinated based on measured neighboring cell interference, to avoid or reduce the interference.

Neighboring cell: In coordinated multipoint transmission/reception, a plurality of cells are coordinated to share CSI measurement information or scheduling information. The plurality of cells that can be coordinated are referred to as being in a same coordinating cluster. When measurement is performed on one cell, another cell in the coordinating cluster is referred to as a neighboring cell.

Neighboring cell interference: When a base station in a neighboring cell performs scheduling for UE within coverage of the base station, a beam may cause relatively large interference to UE in a current cell. The interference caused by the neighboring cell needs to be avoided or reduced to the greatest extent in scheduling and coordination of the current cell and the neighboring cell.

Serving cell: indicates a cell having an RRC link with UE or a cell transmitting data for the UE.

Coordination: Base stations in a same coordinating cluster may share CSI measurement information or scheduling information based on a requirement. In the CS/CB, a typical coordinating behavior is as follows: A base station in a serving cell obtains measurement information and scheduling information of a base station in a neighboring cell. When a beam in the neighboring cell has impact on UE scheduled by the serving cell, the serving cell adjusts an MCS of the UE, or schedules another UE, or the neighboring cell schedules another beam.

CSI configuration information includes the following:

1) Configuration: RRC signaling of a base station is used to allocate a measurement resource to UE. The UE measures corresponding CSI information on the allocated resource.

2) Resource measurement and corresponding measurement content, including:

a) Non-zero power reference signal resource (NZP CSI-RS RE): used to measure channel state information. The channel state information includes an RI, a PMI, and CQI.

b) Interference measurement resource (CSI-IM RE): A serving cell is silent, and a neighboring cell sends data, a reference signal, and the like. Neighboring cell reference information is measured on the resource (an optional configuration).

Serving cell configuration information: Configuration information used to measure channel state information of a serving cell or a signal on an NZP CSI-RS resource in the configuration information is sent by the serving cell.

## BRIEF DESCRIPTION OF DRAWINGS

FIG. 1 is a schematic flowchart of a CSI feedback method according to an embodiment of this application;

FIG. 2 is a schematic diagram of CoMP transmission according to an embodiment of this application;

FIG. 3a and FIG. 3b are schematic structural diagrams of an apparatus configured for CSI feedback according to an embodiment of this application; and

FIG. 4a and FIG. 4b are schematic structural diagrams of an apparatus configured for obtaining CSI according to an embodiment of this application.

## DESCRIPTION OF EMBODIMENTS

A downlink CoMP technology mainly includes joint transmission (JT, Joint Transmission), coordinated scheduling and beamforming (CS/CB, Coordinated Scheduling and Beamforming), and dynamic point selection/dynamic point blanking (DPS/DPB, Dynamic Point Selection/Dynamic Point Blanking). The JT is classified into coherent JT and incoherent JT. To implement the CoMP scheduling, a serving base station needs to know a downlink channel condition (also referred to as a channel state, which may be abbreviated as CSI in LTE, where channel state information is abbreviated as CSI but is not limited in this application) from each station to a target user. In an LTE specification, a reference signal is provided, namely, a CSI reference signal (Channel State Information Reference Signal, CSI-RS), which is used by a terminal to obtain the CSI in transmission modes 9 and 10. A maximum of 16 CSI-RSs can be supported, corresponding to 16 different antenna ports with port numbers 15 to 30. UE estimates a channel by measuring a specific CSI-RS to obtain CSI information, and reports the CSI information to the serving base station by using a physical uplink control channel (Physical uplink control channel, PUCCH). The reported CSI information may include one or a combination of a channel quality indicator (channel quality indicator, CQI), a rank indicator (rank indicator, RI), and precoding matrix indicator (precoding matrix indicator, PMI) information. Some report manners also require a user to report a subband indicator (subband indicator). The base station needs to instruct the UE by configuring higher layer (Radio resource control, RRC) signaling, so that the UE is configured to receive and process the specific CSI-RS, and provide required feedback information.

As one of the CoMP technologies, the CS/CB means that a current cell determines whether a neighboring cell has interference on the current cell during scheduling, and based on the neighboring cell interference, the current cell properly adjusts a scheduling result of the current cell or the neighboring cell properly adjusts a scheduling result of the neighboring cell, to avoid or reduce the neighboring cell interference, measure a channel of the current cell more accurately, and perform scheduling more effectively.

CSI measurement configuration information used in the CS/CB technology is as follows: A serving base station may configure a plurality of CSI processes (process) for target user equipment (UE, user equipment) by using RRC (radio resource control, radio resource control) signaling. In each CSI process, a UE non-zero power (Non-zero power, NZP) CSI-RS configuration may be instructed to measure channel information, and a CSI-IMR (interference measurement resource, Interference measurement resource) may be instructed to measure interference. In addition, report content corresponding to each CSI process may be correspondingly specified in the configuration. Alternatively, the serving base station may configure one CSI process (process) for the target user equipment (UE, user equipment) by using RRC (radio resource control, radio resource control) signaling. In each CSI process, a plurality of UE non-zero power (Non-zero power, NZP) CSI-RS configurations may be instructed to measure channel information.

For example, an existing RRC signaling configuration is one piece of information about a CSI process information element, including a process identifier (csi-ProcessId) and an NZP identifier (csi-RS-ConfigNZPId) (refer to 3GPP TS 36.331-d00):

CSI process

CSI-Process information elements

-- ASN1START

```
CSI-Process-r11 ::=          SEQUENCE {
    csi-ProcessId-r11          CSI-ProcessId-r11,
    csi-RS-ConfigNZPId-r11     CSI-RS-ConfigNZPId-r11,
    csi-IM-ConfigId-r11        CSI-IM-ConfigId-r11,
    p-C-AndCBSRList-r11  SEQUENCE    (SIZE    (1..2))    OF
P-C-AndCBSR-r11,
    cqi-ReportBothProc-r11     CQI-ReportBothProc-r11
OPTIONAL,    -- Need OR
    cqi-ReportPeriodicProcId-r11 INTEGER       (0..maxCQI-ProcExt-r11)
OPTIONAL,-- Need OR
    cqi-ReportAperiodicProc-r11 CQI-ReportAperiodicProc-r11
OPTIONAL,    -- Need OR
    ...,
    [[   alternativeCodebookEnabledFor4TXProc-r12   ENUMERATED
{true}   OPTIONAL,-- Need ON
        csi-IM-ConfigIdList-r12    CHOICE {
            release                NULL,
            setup                  SEQUENCE (SIZE (1..2)) OF
CSI-IM-ConfigId-r12
        }                                     OPTIONAL,-- Need ON
        cqi-ReportAperiodicProc2-r12   CHOICE {
            release                NULL,
            setup                  CQI-ReportAperiodicProc-r11
        }                                     OPTIONAL -- Need ON
```

```
                ]],
                [[    cqi-ReportAperiodicProc-r13          CQI-ReportAperiodicProc-r13
            OPTIONAL,       -- Need ON
                    cqi-ReportAperiodicProc2-r13          CHOICE {
                        release                           NULL,
                        setup                             CQI-ReportAperiodicProc-r13
                    }                                         OPTIONAL,      -- Need ON
                    eMIMO-Type-r13                    CHOICE {
                        release                           NULL,
                        setup                             CHOICE {
                            nonPrecoded-r13
        CSI-RS-InfoNonPrecoded-r13,
                            beamformed-r13
        CSI-RS-InfoBeamformed-r13
                        }
                    }                                             OPTIONAL -- Need ON
                ]]
            }
            P-C-AndCBSR-r11 ::= SEQUENCE {
                p-C-r11                         INTEGER (-8..15),
                codebookSubsetRestriction-r11   BIT STRING
            }
            P-C-AndCBSR-r13 ::= SEQUENCE {
                legacySet                       SEQUENCE {
                    p-C-r11                         INTEGER (-8..15),
                    codebookSubsetRestriction1-r13   BIT STRING
                }                                   OPTIONAL,-- Cond BeamformedKna
                codebookSubsetRestriction2-r13   BIT STRING          OPTIONAL,--
        Cond NonPreCoded
                codebookSubsetRestriction3-r13   BIT STRING          OPTIONAL --
        Cond BeamformedK1a
            }
                P-C-AndCBSR-PerResourceConfig-r13 ::=   SEQUENCE   (SIZE   (1..2))
        OF P-C-AndCBSR-r13
```

-- ASN1STOP

For specific description of a field in the CSI process, refer to the following description:

| CSI-Process field descriptions |
| --- |
| alternativeCodebookEnabledFor4TXProc<br>Indicates whether code book in TS 36.213 [23] Table 7.2.4-0A to Table 7.2.4-0D is being used for deriving CSI feedback and reporting for a CSI process. EUTRAN may configure the field only if the number of CSI-RS ports for non-zero power transmission CSI-RS configuration is 4. |
| codebookSubsetRestriction<br>Parameter: codebookSubsetRestriction, see TS 36.213 [23] and TS 36.211 [21]. The number of bits in the codebookSubsetRestriction for applicable transmission modes is defined in TS 36.213 [23]. |
| codebookSubsetRestriction2List<br>If p-C-AndCBSRList-r13 is included, E-UTRAN includes 2 entries otherwise 1 (i.e. E-UTRAN configures the same number of entries for the original and the CBSR2 field. |
| codebookSubsetRestriction3<br>E-UTRAN configures the field only if neither p-C-AndCBSRListExt nor alternativeCodebookEnabledBeamformed is not configured. |
| cqi-ReportAperiodicProc<br>If csi-MeasSubframeSets-r12 is configured for the same frequency as the CSI process, |
| cqi-ReportAperiodicProc<br>applies for CSI subframe set 1. If csi-MeasSubframeSetl-r10 or csi-MeasSubframeSet2-r10 are configured for the same frequency as the CSI process, cqi-ReportAperiodicProc applies for CSI subframe set 1 or CSI subframe set 2. Otherwise, cqi-ReportAperiodicProc applies for all subframes |
| cqi-ReportAperiodicProc2<br>cqi-ReportAperiodicProc2 is configured only if csi-MeasSubframeSets-r12 is configured for the same frequency as the CSI process. cqi-ReportAperiodicProc2 is for CSI subframe set 2. E-UTRAN shall set cqi-ReportModeAperiodic-r11 in cqi-ReportAperiodicProc2 the same as in cqi-ReportAperiodicProc. |
| cqi-ReportBothProc<br>Includes CQI configuration parameters applicable for both aperiodic and periodic CSI reporting, for which CSI process specific values may be configured. E-UTRAN configures the field if and only if cqi-ReportPeriodicProcId is included and/or if cqi-ReportAperiodicProc is included. |
| cqi-ReportPeriodicProcId<br>Refers to a periodic CQI reporting configuration that is configured for the same frequency as the CSI process. Value 0 refers to the set of parameters defined by the REL-10 CQI reporting configuration fields, while the other values refer to the additional configurations E-UTRAN assigns by CQI-ReportPeriodicProcExt-r11 (and as covered by CQI-ReportPeriodicProcExtId). |
| csi-IM-ConfigId<br>Refers to a CSI-IM configuration that is configured for the same frequency as the CSI process. |
| csi-IM-ConfigIdList<br>Refers to one or two CSI-IM configurations that are configured for the same frequency as the CSI process. csi-IM-ConfigIdList can include 2 entries only if csi-MeasSubframeSets-r12 is configured for the same frequency as the CSI process. UE shall ignore csi-IM-ConfigId-r1 1 if csi-IM-ConfigIdList-r12 is configured. |
| csi-RS-ConfigNZPId<br>Refers to a CSI RS configuration using non-zero power transmission that is configured for the same frequency as the CSI process. |
| p-C<br>Parameter: $P_C$, see TS 36.213 [23, 7.2.5]. |

(continued)

| |
|---|
| p-C-AndCBSRList<br>A p-C-AndCBSRList including 2 entries indicates that the subframe patterns configured for CSI (CQI/PMI/PTI/RI) reporting (i.e. as defined by field csi-MeasSubframeSet1 and csi-MeasSubframeSet2, or as defined by csi-MeasSubframeSets-r12) are to be used for this CSI process, while a single entry indicates that the subframe patterns are not to be used for this CSI process. E-UTRAN does not include 2 entries in p-C-AndCBSRList with csi-MeasSubframeSet1 and csi-MeasSubframeSet2 for CSI processes concerning a secondary frequency. E-UTRAN includes 2 entries in p-C-AndCBSRList when configuring both cqi-pmi-ConfigIndex and cqi-pmi-ConfigIndex2. If included in CSI-RS-InfoBeamformed within CSI-RS-Config (i.e. TM9), E-UTRAN configures a single entry. |

For specific information about an NZP CSI-RS information element, refer to the following description:

NZP CSI-RS

CSI-RS-ConfigNZP information elements

-- ASN1START

CSI-RS-ConfigNZP-r11 ::=      SEQUENCE {

For feedback of CSI measurement content, a feedback manner (also

```
        csi-RS-ConfigNZPId-r11          CSI-RS-ConfigNZPId-r11,
        antennaPortsCount-r11           ENUMERATED    {an1,   an2,   an4,
an8},

        resourceConfig-r11              INTEGER (0..31),
        subframeConfig-r11              INTEGER (0..154),
        scramblingIdentity-r11          INTEGER (0..503),
        qcl-CRS-Info-r11                SEQUENCE {
            qcl-ScramblingIdentity-r11      INTEGER (0..503),
            crs-PortsCount-r11              ENUMERATED    {n1,   n2,   n4,
spare1},

            mbsfn-SubframeConfigList-r11    CHOICE {
                release                         NULL,
                setup                           SEQUENCE {
                    subframeConfigList
        MBSFN-SubframeConfigList

                    }
                }                               OPTIONAL -- Need ON
            }                               OPTIONAL,-- Need OR

            ...,
            [[    eMIMO-Info-r13               CHOICE {
                release                         NULL,
                setup                           SEQUENCE {
                    nzp-resourceConfigList-r13      SEQUENCE   (SIZE   (2..8))
OF ResourceConfig-r13,

                    cdmType                         ENUMERATED
{cdm2, cdm4}    OPTIONAL -- Need OR
                    }
                }                               OPTIONAL -- Need ON
            ]]
        }
        ResourceConfig-r13 ::=          INTEGER (0..31)
        -- ASN1STOP
```

referred to as CSI feedback configuration information in this application) may be configured to determine content reported by the UE. The content reported by the UE includes a type of CSI fed back by the UE, to be specific, one or a combination of an RI, a PMI, and CQI included in the CSI.

In this application, the CSI measurement configuration information and the CSI feedback configuration information are collectively referred to as CSI configuration information. The CSI configuration information may include the CSI measurement configuration information and/or the CSI feedback configuration information.

For example, the following manner is provided in 3GPP 36.213-d01:

CQI and PMI Feedback Types for PUSCH CSI reporting Modes (CQI and PMI feedback types corresponding to PUSCH (physical uplink shared channel, physical uplink shared channel) CSI reporting modes)

|  |  | PMI Feedback Type | | |
| --- | --- | --- | --- | --- |
|  |  | No PMI (No PMI) | Single PMI (Single PMI) | Multiple PMI (Multiple PMI) |
| PUSCH CQI Feedback Type | Wideband (wideband (wideband) CQI) | Mode 1-0 | Mode 1-1 | Mode 1-2 |
|  | UE Selected (UE selected) (subband (subband) CQI) | Mode 2-0 |  | Mode 2-2 |
|  | Higher Layer-configured (higher layer-configured) (subband CQI) | Mode 3-0 | Mode 3-1 | Mode 3-2 |

CQI and PMI Feedback Types for PUCCH CSI reporting Modes (CQI and PMI feedback types corresponding to PUCCH (physical uplink control channel, physical uplink control channel) CSI reporting modes)

|  |  | PMI Feedback Type | |
| --- | --- | --- | --- |
|  |  | No PMI | Single PMI |
| PUCCH CQI Feedback Type | Wideband (wideband CQI) | Mode 1-0 | Mode 1-1 |
|  | UE Selected (subband CQI) | Mode 2-0 | Mode 2-1 |

In the foregoing description, based on the CSI configuration information, the base station to which the serving cell of the UE belongs configures, for the UE, a plurality of NZP CSI-RS resources in a plurality of CSI processes or one CSI process, so as to measure channel information. On a corresponding resource, another cell participating in the CoMP sends CSI-RS information, and therefore, the UE can measure information about a channel from the another cell to the UE. However, if the UE does not need to send information between the another cell and the UE, the UE only needs to learn of an RI/PMI ("/" represents "and/or") from the another cell to the UE, and therefore, the CQI information does not need to be fed back. Based on the foregoing description, there is no CSI process in which the CQI information may not be fed back, and there is no NZP CSI-RS resource on which the CQI may not be fed back. In addition, in feedback configurations of the PUCCH and the PUSCH, there is no configuration in which the CQI information may not be fed back. Therefore, in the CS/CB technology, signaling such as higher layer signaling (for example, RRC signaling) may be added, so that only the RI and the PMI are fed back for a CSI process or an NZP CSI-RS resource, and the CQI is not fed back.

In the CS/CB, a size of a coordinating cluster depends on network intensity, a service requirement, and the like. Therefore, in some cases, the coordinating cluster may include a relatively large quantity of cells. During multi-cell coordination, each cell may have several interference beams, and a plurality of cells have more interference beams. As a result, the UE obtains many measurement results. In a lot of interference measured by the UE, some interference is strong for the UE, and some interference is weak. The strong interference needs to be fed back to a base station to which the current cell belongs, and the weak interference does not need to be fed back. In a current protocol, the UE reports content according to a configuration of the base station only. Generally, all measurement information needs to be fed back. If all interference information of all neighboring cells is reported, a feedback quantity is greatly increased, and processing complexity of a scheduler is increased. In addition, the base station cannot obtain all neighboring cell interference information at the same time. There is a time difference when the base station obtains information fed back by the UE (especially when a plurality of CSI processes are configured). Therefore, the scheduler of the base station does not execute a scheduling algorithm until all feedback data arrives. The CQI needs to be included in the CSI feedback content of the UE for the neighboring cell, and the UE does not have a filtering mechanism to determine whether to report the CSI of the neighboring cell.

Based on the foregoing discovery, the inventor of this application provides a CSI feedback method to reduce waste of signaling resources, improve coordination efficiency, reduce overheads especially in the CS/CB scenario, and implement CSI measurement and feedback more efficiently.

The embodiments of the present invention are applicable to homogeneous network or heterogeneous network scenarios. A type of a transmission point using a coordinated transmission technology is not limited in the embodiments of the present invention. For example, coordinated transmission may be performed between various types of transmission points, such as between a macro base station and a macro base station, between a micro base station and a micro base station, or between a macro base station and a micro base station.

In the embodiments of the present invention, a first device and a second device are included. The second device may configure the first device to perform CSI measurement and feedback for a plurality of coordinated transmission points, and the first device may perform the CSI measurement and feedback for the plurality of coordinated transmission points based on configuration information sent by the second device. The first device may be a terminal, the second device may be a network device, for example, a base station or another type of transmission point device. Certainly, the second device is not limited to the foregoing two devices. For example, the second device may be a terminal that can perform a configuration operation on another terminal.

The base station may be an evolved NodeB (Evolved Node B, eNB or e-NodeB for short) in an LTE system or an LTE-advanced system, a macro base station, a micro base station (also referred to as a "small cell"), a picocell base station, an access point (Access Point, AP for short), a transmission point (Transmission Point, TP for short), or the like, or may be a base station in a future network such as a base station in a 5G network.

In the embodiments of the present invention, the terminal may also be referred to as user equipment (User Equipment, UE for short), or may be referred to as a terminal, a mobile station (Mobile Station, MS for short), a mobile terminal (Mobile Terminal), or the like. The terminal may perform communication with one or more core networks through a radio access network (Radio Access Network, RAN for short). For example, the terminal may be a mobile phone (or referred to as a "cellular" phone) or a computer having a mobile terminal function. For example, the terminal may be a portable, pocket-sized, handheld, computer built-in, or in-vehicle mobile apparatus, and exchange voice and/or data with the radio access network. The terminal in the embodiments of the present invention may be a D2D (Device to Device, device to device) terminal or an M2M (Machine to Machine, machine to machine) terminal.

For ease of description, in the following embodiment, for example, the user equipment is used as the first device and the network device is used as the second device for description.

This embodiment of this application is applicable to a coordinated multipoint transmission/reception scenario, for example, applicable to a CS/CB scenario.

A CSI feedback method provided in this embodiment of this application includes the following steps.

S101. The user equipment receives M groups of CSI configuration information from the network device, where M is an integer greater than or equal to 1.

Optionally, the M groups of CSI configuration information include CSI configuration information corresponding to a serving cell of the user equipment, where M is an integer greater than or equal to 2.

Correspondingly, the network device sends the M groups of CSI configuration information to the user equipment.

Each group of CSI configuration information includes at least one of an identifier of a cell, an ID of a CSI process, an identifier of a set of non-zero power CSI reference signal resources, or an identifier of a set of CSI-IM (interference measurement) resources. The cell is associated with the user equipment. The associated cell includes the serving cell of the user equipment or a cell coordinating with the serving cell of the user equipment. The CSI process is corresponding to the identifier of the set of non-zero power reference signal resources, or the CSI process is corresponding to the identifier of the set of CSI-IM resources.

Optionally, the network device is a network device to which the serving cell of the user equipment belongs.

Optionally, the M groups of CSI configuration information may be corresponding to M cells (may also be represented or referred to as a beam). The M cells may include the serving cell of the UE and other M-1 cells (referred to as neighboring cells in this application) participating in CS/CB of the serving cell. It may be understood that the M cells may include M cells (also referred to as neighboring cells) participating in the CS/CB of the serving cell of the UE, or the M cells may include cells performing various types of CoMP transmission (also referred to as neighboring cells). For example, the M cells may include one or a combination of the serving cell of the UE, one or more cells (also referred to as neighboring cells) participating in the CS/CB of the serving cell of the UE, one or more cells participating in JT of the serving cell of the UE, and one or more cells participating in dynamic point selection/blanking. In this application, a network device to which the cell participating in the CoMP transmission belongs may also be referred to as a transmission point (TP, transmission point). The transmission point may be a base station or a radio frequency unit of a base station, and this is not limited herein.

In an optional scenario of this application, a cell corresponding to the M groups of CSI configuration information includes only the serving cell of the UE and the cells (neighboring cells) participating in the CS/CB of the serving cell, or includes only the cells (neighboring cells) participating in the CS/CB of the serving cell of the UE.

In another optional scenario of this application, a cell corresponding to the M groups of CSI configuration information further includes a cell of another type of CoMP in addition to the serving cell of the UE or the cells (neighboring cells) participating in the CS/CB of the serving cell. Requirements on CSI feedback may be the same or different for each type of cell (for example, for a cell in JT, the CQI needs to be reported, and for a cell in CS/CB, the CQI may not be reported). All requirements on CSI feedback corresponding to CSI configuration information of the cells may be predefined by using a protocol or may be configured by using the network device.

Impact of the cell participating in the CS/CB on channel quality of the serving cell or the cell participating in the JT (usually including a cell of best channel quality) may be referred to as interference.

S102. The user equipment feeds back, based on the CSI configuration information, N groups of CSI in M groups of CSI corresponding to the M groups of CSI configuration information, where N is an integer greater than or equal to 0 but not greater than M.

Further, N is greater than or equal to 1, the N groups of CSI include at least CSI corresponding to the CSI configuration information of the serving cell, or the N groups of CSI include at least one group of CSI of best channel quality.

Correspondingly, the network device receives the N groups of CSI in the M groups of CSI corresponding to the M groups of CSI configuration information from the user equipment.

Further, the method may further include the following steps.

S103. The user equipment feeds back indication information, where the indication information is used to indicate N groups of CSI configuration information corresponding to the N groups of CSI fed back by the user equipment.

Correspondingly, the network device receives the indication information from the user equipment.

Optionally, the indication information may be in a bitmap form or may be identification information of CSI configuration information corresponding to each group of CSI.

Specifically, when the indication information is in the bitmap form, the indication information may include M groups of bits, each group of bits includes at least one bit (bit), and each group of bits indicates whether CSI corresponding to one group of CSI configuration information in the M groups of CSI configuration information is fed back by the user equipment. For example, if a value of M is 5, the indication information includes 5 groups of bits, and each group of bits is corresponding to CSI corresponding to one group of CSI configuration information. When CSI corresponding to a group of CSI configuration information needs to be fed back, a bit corresponding to the CSI may be set to a preset value such as 1. When CSI corresponding to a group of CSI configuration information does not need to be fed back, a bit corresponding to the CSI may be set to another preset value such as 0. It may be understood that a feedback sequence of the N groups of CSI may be related to, for example, consistent with, a sequence of the M groups of CSI configuration information corresponding to the M groups of bits. In this way, based on the feedback sequence, the network device may learn of the N groups of CSI configuration information corresponding to the N groups of CSI that are fed back.

Optionally, the M groups of bits may be consecutively transmitted, or each group of bits in the M groups of bits is transmitted with a group of CSI indicated by the group of bits.

Optionally, when the N groups of CSI are fed back, the UE may allocate resources only to the N groups of CSI, and the N groups of CSI are carried in sequence on the resources allocated by the UE. Alternatively, the UE may reserve resources for the M groups of CSI corresponding to the M groups of CSI configuration information. The N groups of CSI that are actually fed back are carried in sequence on corresponding N groups of resources in M groups of reserved CSI resources.

It may be understood that the indication information may include M-1 groups of bits. It may be considered by default that CSI corresponding to the CSI configuration information of the serving cell of the UE needs to be fed back, and the network device may determine, in another manner, that feedback of the group of CSI is corresponding to the CSI configuration information of the serving cell. Therefore, the group of CSI may not need to be indicated in the feedback of the UE. Specifically, for an indication manner of the M-1 groups of bits, refer to the indication manner of the M groups of bits. Optionally, the M-1 groups of bits may be consecutively transmitted, or each group of bits in the M-1 groups of bits is transmitted with a group of CSI indicated by the group of bits.

Specifically, when the indication information is the identification information of the CSI configuration information corresponding to each group of CSI, the identification information of the CSI configuration information may be cell identification information, CSI process identification information, NZP CSI-RS resource identification information, or CSI-IM resource identification information. For details, refer to content included in each group of CSI configuration information. Details are not described herein again. Optionally, the identification information of the CSI configuration information may further be an index of each group of CSI configuration information, to be specific, a number of each group of CSI configuration information in the configured M groups of CSI configuration information. For example, when the network device configures M pieces of configuration information for the UE, a quantity of bits occupied by the index may be $\log 2M$, the index of each group of CSI configuration information may be one of M positive integers from 0 to M-1, and the sequence may be obtained in advance by the network device and the UE. It may be understood that the UE may be notified, by using physical layer signaling or higher layer signaling, of the quantity of bits occupied by the index, or the quantity of the index bits may be predefined in a protocol.

In an optional implementation, the identification information of the CSI configuration information corresponding to each group of CSI may be transmitted with CSI indicated by the identification information, and the CSI may include an RI, a PMI, or CQI, so that CSI feedback can be more flexible.

Optionally, code modulation may be performed on the identification information along with the RI, the PMI, or the CQI, in the CSI, indicated by the identification information. Alternatively, code modulation may be separately performed on the identification information independent of the RI, the PMI, or the CQI, in the CSI, indicated by the identification information. Specifically, how the identification information of the CSI configuration information corresponding to each group of CSI is sent with the CSI (or a format in which the indication information is sent with the CSI) may be predefined by a system.

For example, the identification information of the CSI configuration information corresponding to each group of CSI may be transmitted with the RI, and a transmission sequence thereof may be predefined by a system, for example, the identification information is transmitted before the RI, or the identification information is transmitted after the RI.

For example, the identification information of the CSI configuration information corresponding to each group of CSI may be sent with a subband or wideband PMI and/or the CQI. A transmission sequence thereof may be predefined by a system, for example, the identification information is transmitted before the PMI and/or the CQI, or the identification information is transmitted after the PMI and/or the CQI, or the identification information is set at a specified code location.

For example, the identification information of the CSI configuration information corresponding to each group of CSI may be sent with a CRI (CSI-RS resource ID, CSI-RS resource identifier). A transmission sequence thereof may be predefined by a system, for example, the identification information is transmitted before the CRI, or the identification information is transmitted after the CRI, or the identification information is set at a specified code location. When a reported type for CSI measurement is a class B (a type B, indicating beamformed CSI-RS, beamformed CSI-RS), and K CSI-RS resources (K > 1) are configured for the CSI measurement, the UE needs to add the CRI to the CSI that is fed back. For example, the UE may be notified of the reported type for the CSI measurement by using an eMIMO-Type information element in higher layer signaling.

Optionally, the indication information is sent on a PUSCH, or the indication information is sent on a PUCCH.

When the indication information is sent on the PUCCH, a PUCCH reporting type such as a type 11-16 may be used to indicate a format in which the indication information is sent with the CSI.

A type 11 indicates that joint transmission of a CRI and indication information is supported.

A type 12 indicates that joint transmission of an RI and indication information is supported.

A type 13 indicates that joint transmission of a CRI, an RI, and indication information is supported.

A type 14 indicates that joint transmission of wideband CQI and indication information is supported.

A type 15 indicates that joint transmission of wideband CQI, a PMI, and indication information is supported.

A type 16 indicates that joint transmission of subband CQI, a second PMI, and indication information is supported.

Specifically, the manner in which the UE determines the N groups of CSI that needs to be fed back may include one or a combination of the following manners:

Manner 1. M groups of CSI corresponding to the M groups of CSI configuration information are obtained, and N groups of CSI in the M groups of CSI are determined and fed back by comparing each group of CSI in the M groups of CSI with a corresponding threshold.

Specifically, CQI included in the CSI may be compared with a corresponding first threshold.

Optionally, when the CQI is greater than the first threshold, the CSI is fed back correspondingly.

Manner 2:

(1) The CSI corresponding to the CSI configuration information of the serving cell of the UE needs to be fed back; or a group of CSI indicating best channel quality in the M groups of CSI corresponding to the M groups of CSI configuration information needs to be fed back. The best channel quality usually indicates a maximum CQI value.
(2) For CSI corresponding to CSI configuration information of a non-serving cell or another group of CSI indicating not the best channel quality, a feedback rule may be as follows:

The CSI of the CSI configuration information of the serving cell or the group of CSI indicating the best channel quality in the M groups of CSI corresponding to the M groups of CSI configuration information is used as reference CSI, and the CSI configuration information corresponding to the reference CSI is referred to as reference CSI configuration information.

CQI in CSI corresponding to another group of CSI configuration information is compared with CQI in the reference CSI at a time. When a difference is less than or equal to a second threshold, the CSI corresponding to the group of CSI configuration information is fed back. When the difference is less than or equal to the second threshold, it indicates that channel quality corresponding to a non-reference CSI configuration information is similar to channel quality corresponding to the reference CSI configuration information. If the non-reference CSI configuration information is corresponding to a cell in CS/CB, the cell has relatively large interference on a channel corresponding to the reference CSI configuration information. If the non-reference CSI configuration information is corresponding to a cell in JT, the cell may be preferably scheduled to participate in the JT. If the non-reference CSI configuration information is corresponding to a cell in DPS, the cell may be preferably scheduled to transmit data for the UE.

Alternatively, when the UE adds another group of CSI configuration information to the reference CSI configuration information at a time (in other words, two groups of CSI configuration information are used by the UE to measure the channel), channel information is measured to obtain CQI in the corresponding CSI. A plurality of pieces of CQI obtained through measurement is compared with the CQI in the reference CSI, and when a difference is greater than or equal to a third threshold, CSI corresponding to corresponding CSI configuration information is fed back. When the difference is greater than or equal to the third threshold, it indicates that a channel corresponding to the non-reference CSI configuration information has relatively large impact on a channel corresponding to the reference CSI configuration information. If the non-reference CSI configuration information is corresponding to a cell in CS/CB, the cell has relatively large interference on the channel corresponding to the reference CSI configuration information. If the non-reference CSI configuration information is corresponding to a cell in JT, the cell may be preferably scheduled to participate in the JT. If the non-reference CSI configuration information is corresponding to a cell in DPS, the cell may be preferably scheduled to transmit data for the UE.

It may be understood that one or more of the first threshold, the second threshold, and the third threshold in manner 1 and/or manner 2 may be predetermined in a protocol (without the need of being configured in another manner) or may be configured by the network device, for example, by using physical layer signaling or higher layer signaling. The configuration may be performed by using the CSI configuration information in S101, or may be performed in another manner. This is not limited herein.

Optionally, when the UE measures interference impact from a beam of a neighboring cell on a current cell, a power threshold corresponding to the interference beam may be measured and reported. The power value threshold is as follows: When a power value of a beam is greater than the power value threshold, the beam needs to be considered in various coordinated scenarios such as CS/CB, JT, or DSP.

A method for determining the power value threshold may include the following three solutions:

Solution 1: This solution is corresponding to manner 1 of obtaining M groups of CSI corresponding to the M groups of CSI configuration information, and determining and feeding back N groups of CSI in the M groups of CSI by comparing each group of CSI in the M groups of CSI with the corresponding first threshold.

Based on the threshold, if a CQI value measured for the group of CSI configuration information is CQI 1, a power value threshold PA may exist. Therefore, when power P1 corresponding to the group of CSI configuration information is greater than PA, the CQI 1 in the case of the power P1 is greater than the first threshold; when power P2 corresponding to the group of CSI configuration information is less than (or less than or equal to) PA, the CQI 1 in the case of the power P2 is less than the first threshold. If the group of CSI configuration information is corresponding to a cell in CS/CB (a beam of a neighboring cell), it indicates that the beam of the neighboring cell has relatively large interference on the UE when power of the beam of the neighboring cell is greater than the power value threshold PA. Interference of the beam of the neighboring cell on the UE is acceptable when the power of the beam of the neighboring cell is less than (or equal to) the power value threshold PA. If the group of CSI configuration information is corresponding to a cell in JT (a beam of a neighboring cell), when power of the beam of the neighboring cell is greater than the power value threshold PA, the cell may be preferably scheduled to participate in the JT, and power of the cell is configured greater than the power value threshold PA. If the group of CSI configuration information is corresponding to a cell in DPS (a beam of a neighboring cell), when power of the beam of the neighboring cell is greater than the power value threshold PA, the cell may be preferably scheduled to transmit data for the UE, and power of the cell is configured greater than the power value threshold PA.

A manifestation of the power value threshold PA may be a specific value or a ratio. Correspondingly, in comparison, a manifestation of the power P1 or P2 corresponding to the group of CSI configuration information is the same as the manifestation of the power value threshold.

For example, the power value threshold PA may meet the following conditions:

$$\frac{P1|HW|^2}{I+N} > threshold1, \qquad P1 > PA$$

$$\frac{P2|HW|^2}{I+N} \le threshold1, \qquad P2 \le PA$$

H is a channel matrix measured by the UE based on the group of CSI configuration information, W is a precoding matrix selected by the UE based on the group of CSI configuration information, I is an interference value, N is a noise value, P1 and P2 are power values corresponding to the group of CSI configuration information, threshold 1 is the first threshold, and $|\ |^2$ is the square of a modulo operation result. $|HW|^2$ is a value obtained through calculation after power of data and pilot configured by the network device is considered. In another optional way, $|HW|^2$ in the foregoing formula may be replaced with $P_x|HW|^2$, where $P_x$ is a power value of data and pilot configured by the network device.

Solution 2: This solution is for the feedback rule in manner 2: The CSI of the CSI configuration information of the serving cell or the group of CSI indicating the best channel quality in the M groups of CSI corresponding to the M groups of CSI configuration information is used as the reference CSI, and the CSI configuration information corresponding to the reference CSI is referred to as reference CSI configuration information. CQI in CSI corresponding to another group of CSI configuration information (also referred to as the non-reference CSI configuration information) is compared with the CQI in the reference CSI at a time. When a difference is less than or equal to the second threshold, the CSI corresponding to the group of CSI configuration information is fed back.

When a measured CQI value is CQI 1 for one group of non-reference CSI configuration information, a power value threshold PB may exist. Therefore, when power P1 corresponding to the group of non-reference CSI configuration information is greater than PB, and when the CQI 1 in the case of the power P1 is compared with CQI included in the CSI corresponding to the reference CSI configuration information, a difference is less than or equal to the second threshold. When power P2 corresponding to the group of non-reference CSI configuration information is less than (or less than or equal to) PB, and when CQI 1 in the case of the power P2 is compared with the CQI included in the CSI corresponding to the reference CSI configuration information, a difference is greater than the second threshold. If the group of non-reference CSI configuration information is corresponding to a cell in CS/CB (a beam of a neighboring cell), it indicates that the beam of the neighboring cell has relatively large interference on the UE when power of the beam of the neighboring cell is greater than the power value threshold PB. Interference of the beam of the neighboring cell on the UE is acceptable when the power of the beam of the neighboring cell is less than (or equal to) the power value threshold PB. If the group of non-reference CSI configuration information is corresponding to a cell in JT (a beam of a neighboring cell), when power of the beam of the neighboring cell is greater than the power value threshold PB, the cell may be preferably scheduled to participate in the JT, and power of the cell is configured greater than the power value threshold PB. If the group of non-reference CSI configuration information is corresponding to a cell in DPS (a beam of a neighboring cell), when power of the beam of the neighboring cell is greater than the power value threshold PB, the cell may be preferably scheduled to transmit data for the UE, and power of the cell is configured greater than the power value threshold PB.

A manifestation of the power value threshold PB may be a specific value or a ratio. Correspondingly, in comparison, a manifestation of the power P1 or P2 corresponding to the group of non-reference CSI configuration information is the same as the manifestation of the power value threshold.

For example, the power value threshold PB may meet the following conditions:

$$\frac{P1|HW|^2}{I+N} - ReferenceCQIvalue \le threshold\,2, \qquad P1 > PB$$

$$\frac{P2|HW|^2}{I+N} - ReferenceCQIvalue > threshold\,2, \qquad P2 \le PB$$

$$ReferenceCQIvalue = \frac{|H'W'|^2}{I'+N'}$$

The reference CQI value is a CQI value included in the CSI corresponding to the reference CSI configuration information, H is a channel matrix measured by the UE based on the group of CSI configuration information, W is a precoding matrix selected by the UE based on the group of CSI configuration information, I is an interference value, N is a noise value, P1 and P2 are power values corresponding to the group of CSI configuration information, threshold 2 is the second threshold, $|\ |^2$ is the square of a modulo operation result, H' is a channel matrix measured by the UE for the reference CSI configuration information, W' is a precoding matrix selected by the UE for the reference CSI configuration information, I' is an interference value measured for the reference CSI configuration information, and N' is a noise value measured for the reference CSI configuration information. $|HW|^2$ is a value obtained through calculation after power of data and pilot configured by the network device is considered. In another optional way, $|HW|^2$ in the foregoing formula may be replaced with $P_x|HW|^2$, where $P_x$ is a power value of data and pilot configured by the network device.

Solution 3: This solution is for the other feedback rule in manner 2: When the UE adds another group of CSI configuration information to the reference CSI configuration information at a time (in other words, two groups of CSI configuration information are used by the UE to measure the channel), channel information is measured to obtain CQI in the corresponding CSI. A plurality of pieces of CQI obtained through measurement is compared with the CQI in the reference CSI, and when a difference is greater than or equal to the third threshold, CSI corresponding to corresponding CSI configuration information is fed back.

When one group of non-reference CSI configuration information is added to the reference CSI configuration information (in other words, two groups of CSI configuration information are used by the UE to measure the channel) to measure channel information, so as to obtain a CQI value CQI 1 in corresponding CSI, a power value threshold PC may exist. Therefore, when power P1 corresponding to the group of non-reference CSI configuration information is greater than PC, and when the CQI 1 in the case of the power P1 is compared with CQI in the reference CSI, a difference is greater than the third threshold. When power P2 corresponding to the group of non-reference CSI configuration information is less than (or less than or equal to) PC, and when the CQI 1 in the case of the power P2 is compared with the CQI in the reference CSI, a difference is less than or equal to the third threshold. If the group of non-reference CSI configuration information is corresponding to a cell in CS/CB (a beam of a neighboring cell), it indicates that the beam of the neighboring cell has relatively large interference on the UE when power of the beam of the neighboring cell is greater than the power value threshold PC. Interference of the beam of the neighboring cell on the UE is acceptable when the power of the beam of the neighboring cell is less than (or equal to) the power value threshold PC. If the group of non-reference CSI configuration information is corresponding to a cell in JT (a beam of a neighboring cell), when power of the beam of the neighboring cell is greater than the power value threshold PC, the cell may be preferably scheduled to participate in the JT, and power of the cell is configured greater than the power value threshold PC. If the group of non-reference CSI configuration information is corresponding to a cell in DPS (a beam of a neighboring cell), when power of the beam of the neighboring cell is greater than the power value threshold PC, the cell may be preferably scheduled to transmit data for the UE, and power of the cell is configured greater than the power value threshold PC.

A manifestation of the power value threshold PC may be a specific value or a ratio. Correspondingly, in comparison, a manifestation of the power P1 or P2 corresponding to the group of non-reference CSI configuration information is the same as the manifestation of the power value threshold.

For example, the power value threshold PC may meet the following conditions:

$$ReferenceCQIvalue - \frac{|H_0 W_0|^2}{P1|H_1 W_1|^2 + I_0 + N} > threshold 3 \quad , \quad P1 > PC$$

$$ReferenceCQIvalue - \frac{|H_0 W_0|^2}{P2|H_1 W_1|^2 + I_0 + N} \leq threshold 3 \quad , \quad P2 \leq PC$$

$$ReferenceCQIvalue = \frac{|H_0 W_0|^2}{I_0 + N}$$

The reference CQI value is the CQI value included in the CSI corresponding to the reference CSI configuration information, P1 and P2 are power values corresponding to the group of CSI configuration information, threshold 3 is the third threshold, $|\;|^2$ is the square of a modulo operation result, $H_0$ is a channel matrix measured by the UE based on the reference CSI configuration information, $W_0$ is a precoding matrix measured and selected by the UE based on the reference CSI configuration information, $H_1$ is a channel measured by the UE based on the group of CSI configuration information to be measured and reported, $W_1$ is a precoding matrix measured and selected by the UE based on the group of CSI configuration information to be measured and reported, $I_0$ is interference other than the group of CSI configuration information to be measured and reported, and N is noise. $|H_0 W_0|^2$ and $|H_1 W_1|^2$ are values obtained through calculation after power of data and pilot configured by the network device is considered. In another optional way, $|H_0 W_0|^2$ and $|H_1 W_1|^2$ in the foregoing formula may be replaced with $P_x|H_0 W_0|^2$ and $P_y|H_1 W_1|^2$, where $P_x$ and $P_y$ are power values of data and pilot configured by the network device.

Optionally, the power value threshold may be reported with the CRI, the RI, the PMI, or the CQI when reported by the UE. For a collectively reporting manner, refer to the foregoing description of reporting the indication information with the CRI, the RI, the PMI, or the CQI. To be specific, the power value threshold may be sent with one or more of the CRI, the RI, the PMI, or the CQI. Specifically, code modulation may be simultaneously or separately performed, and in terms of sequence, the power value threshold may be transmitted before or after other information. Specifically, the collectively reporting manner may be predefined by a system or may be configured by using a PUCCH reporting type.

The power value threshold may be reported by using a relative value or an absolute value.

For example, when a relative value is used, a relative value (for example, 1, 1/2, 1/3, or 1/4) of the power value threshold may be classified into two levels that need to occupy 1 bit for reporting, or may be classified into four levels that need to occupy 2 bits for reporting. For example:

| Power information bit value | Relative power value |
|---|---|
| 00 | 1 |
| 01 | 1/2 |
| 10 | 1/3 |
| 11 | 1/4 |

Alternatively, when an absolute value is used, absolute values of the power value threshold (for example, integers from -8 to 15) are quantized. A quantizing interval may be predefined by a system, and may be 1, 2 or a larger value. Different quantizing intervals indicate different quantities of bits occupied by the power value threshold. For example, when the absolute values are integers from -8 to 15, the power value threshold needs to occupy 5 bits when the quantizing interval is 1, or the power value threshold needs to occupy 4 bits when the quantizing interval is 2, or the power value threshold needs to occupy 3 bits when the quantizing interval is 4.

| Power information bit value | Absolute power value |
|---|---|
| 000 | $(-\infty, -8)$ |
| 001 | $[-8, -4]$ |
| 010 | $(-4, 0]$ |
| 011 | $(0, 4]$ |
| 100 | $(4, 8]$ |
| 101 | $(8, 12]$ |
| 110 | $(12, 16]$ |
| 111 | $(16, +\infty)$ |

Optionally, whether the UE reports the power information may be predefined by a system or may be configured by a transmission point, for example, by using the CSI configuration information or other signaling.

After obtaining information (for example, CSI) about a cell (a beam of a neighboring cell) that needs to be considered in the coordinated scenario and a corresponding power value threshold, the coordinated transmission point may flexibly perform coordinated scheduling transmission. For example, for an interference beam (a cell (beam) that needs to be considered in the CS/CB), power less than the reported power value threshold may be used for transmission (or the coordinated TP may determine a transmission power value based on the reported power value threshold and a fixed algorithm, for example, both the reported power value threshold and a path loss value are considered, to be specific, reported power value threshold + path loss value = transmission power value), achieving an objective of interference coordination without affecting beam scheduling for the UE in the cell. Compared with directly avoiding the beam, this method can improve system performance.

Further, corresponding to one group of CSI configuration information, one group of CSI fed back by the UE may include a plurality of pieces of CSI. The UE may perform CSI measurement on all code words, so as to obtain one or more pieces of CSI. Each piece of CSI may be corresponding to one code word, and different pieces of CSI are corresponding to different code words. Specifically, a quantity of CSI included in one group of CSI fed back by the UE may be predetermined in a protocol or may be configured by using the network device. A specific rule of determining to feed back which CSI in all CSI obtained through measurement may be predetermined in a protocol or may be configured by using the network device. According to a specific rule, only several pieces of top ranking CSI (for example, several pieces of CQI with relatively large values) indicating good channel quality (also referred to as strong interference) are fed back, and a specific quantity is determined by a quantity of CSI that needs to be fed back. Corresponding to different groups of CSI configuration information, quantities of CSI that needs to be fed back may be the same or different. When quantities of CSI that needs to be fed back by using different groups of CSI configuration information is the same, a configuration parameter of the quantity of CSI that needs to be fed back to configure different groups of CSI configuration information may be common. When one group of CSI includes a plurality of pieces of CSI, a plurality of power value thresholds may be correspondingly fed back, or only power value thresholds corresponding to some CSI may be fed back, for example, only a power value threshold corresponding to the first CSI is fed back. This may be predefined by a system based on a requirement.

There may be a plurality of manners in which a quantity of CSI included in each group of CSI is indicated. For example, when the indication information is in a bitmap form, each group of bits in the bitmap may be used to specifically indicate a quantity of CSI included in each group of CSI that is fed back, and quantities of bits for the groups of bits may be predetermined as same or different in a protocol. For example, when a protocol predetermines or configures that each group of CSI configuration information reports (feeds back) one piece of strongest interference (or best channel quality), each bit in the bitmap represents an interference (channel) reporting status of one cell. 1 represents that strongest interference (best channel) information of the cell is reported, and 0 represents that the cell does not report interference (channel) information. Alternatively, for example, when each cell reports at most two pieces of strongest interference, every two bits in the bitmap represent one cell. 00 represents that UE does not report interference (or channel) information of the cell, 01 represents that UE reports one piece of interference (channel) information of the cell, and 10 represents that UE reports two pieces of interference (channel) information of the cell. It may be understood that other information may be specifically used to indicate a quantity of CSI included in each group of CSI that is fed back. This is not limited herein.

When a group of CSI fed back by the UE includes a plurality of pieces of CSI, the foregoing manner may also be used in which the UE determines N groups of CSI that needs to be fed back. As predetermined in a protocol or configured by a network, a corresponding quantity of CSI is fed back when a group of CSI is fed back. In comparison, a plurality of pieces of CQI in a group of CSI (whether to feed back the group of CSI is to be determined) and a plurality of pieces of CQI in the reference CSI are considered. Optionally, in one manner, a plurality of pieces of CQI (for example, three pieces of CQI corresponding to three code words) in a group of CSI (whether to feed back the group of CSI is to be determined) are separately compared with a plurality of pieces of CQI (for example, three pieces of CQI corresponding to three code words) in the reference CSI, so as to obtain a corresponding quantity of differences (for example, three pieces of CQI are compared with three pieces of CQI in the reference CSI to obtain nine differences). A function (the function may be maximizing, minimizing, averaging, or another mathematical operation) of the obtained differences is compared with a corresponding threshold, so as to determine whether the group of CSI is to be fed back. Optionally, in another manner, a maximum value of a plurality of pieces of CQI in a group of CSI (whether to feed back the group of CSI is to be determined) is compared with a maximum value or a minimum value of a plurality of pieces of CQI in the reference CSI to obtain a difference, and the difference is compared with a corresponding threshold. Alternatively, a minimum value of a plurality of pieces of CQI in a group of CSI (whether to feed back the group of CSI is to be determined) is compared with a maximum value or a minimum value of a plurality of pieces of CQI in the reference CSI to obtain a difference, and the difference is compared with a corresponding threshold, so as to determine whether the group of CSI is to be fed back. If it is determined that the group of CSI is to be fed back, the group of CSI is fed back based on a quantity of CSI that needs to be fed back in the group of CSI and a corresponding feedback rule (for example, the feedback rule described above, such as, based on interference intensity). It may be understood that a specific threshold may vary with the function of the differences or a comparison object, and determining the threshold may be predefined in a protocol or may be configured by the network device. This is not limited herein.

It may be understood that each group of CSI in the N groups of CSI that is fed back (also referred to as each piece of CSI in each group of CSI) may include same or different content. Specifically, content included in each group of CSI is one or a combination of an RI, a wideband or subband PMI, or CQI, which may be referred to as a type of the CSI. For example, only an RI and a wideband PMI are included, or only an RI and a subband PMI are included, or an RI, a wideband PMI, and CQI are included, or an RI, a subband PMI, and CQI are included. This is not limited herein. A type of each group of CSI may be predefined in a protocol or may be configured by using the network device. For example, the UE receives, from the network device, information indicating the type of each group of CSI. The information indicating the type of each group of CSI may be carried in higher layer signaling such as RRC signaling. Optionally, the information indicating the type of each group of CSI may be carried in the CSI configuration information for configuration.

For example, indication information may be added to one piece of information about a CSI process information element, so as to indicate that CSI configuration information indicated by the CSI process needs to correspondingly feed back only an RI and a PMI without the need of feeding back CQI. For example, a pmi-ReportProc-r14 information element in the following information elements.

CSI-Process information elements

-- ASN1START

CSI-Process-r11 ::=          SEQUENCE {

   csi-ProcessId-r11          CSI-ProcessId-r11,

   csi-RS-ConfigNZPId-r11          CSI-RS-ConfigNZPId-r11,

   csi-IM-ConfigId-r11          CSI-IM-ConfigId-r11,

   p-C-AndCBSRList-r11  SEQUENCE  (SIZE  (1..2))  OF
P-C-AndCBSR-r11,

   cqi-ReportBothProc-r11          CQI-ReportBothProc-r11
OPTIONAL,     -- Need OR

   cqi-ReportPeriodicProcId-r11 INTEGER (0..maxCQI-ProcExt-r11)
OPTIONAL,-- Need OR

   cqi-ReportAperiodicProc-r11  CQI-ReportAperiodicProc-r11
OPTIONAL,     -- Need OR

   pmi-ReportProc-r14  OPTIONAL -- Need OR

   ...,

   [[    alternativeCodebookEnabledFor4TXProc-r12   ENUMERATED
{true}    OPTIONAL,-- Need ON

   csi-IM-ConfigIdList-r12          CHOICE {

     release                NULL,

     setup                SEQUENCE  (SIZE  (1..2))  OF
CSI-IM-ConfigId-r12

    }                                OPTIONAL,-- Need ON

   cqi-ReportAperiodicProc2-r12    CHOICE {

     release                NULL,

     setup                CQI-ReportAperiodicProc-r11

    }                                OPTIONAL -- Need ON

   ]],

   [[    cqi-ReportAperiodicProc-r13          CQI-ReportAperiodicProc-r13
OPTIONAL,-- Need ON

   cqi-ReportAperiodicProc2-r13          CHOICE {

     release                NULL,

     setup                CQI-ReportAperiodicProc-r13

```
                    }                          OPTIONAL,    -- Need ON
            eMIMO-Type-r13                 CHOICE {
                release                    NULL,
                setup                      CHOICE {
                    nonPrecoded-r13
        CSI-RS-InfoNonPrecoded-r13,
                    beamformed-r13
        CSI-RS-InfoBeamformed-r13
                    }
                }                                      OPTIONAL -- Need ON
            ]]
        }
        P-C-AndCBSR-r11 ::= SEQUENCE {
            p-C-r11                    INTEGER (-8..15),
            codebookSubsetRestriction-r11     BIT STRING
        }
        P-C-AndCBSR-r13 ::= SEQUENCE {
            legacySet                  SEQUENCE {
                p-C-r11                    INTEGER (-8..15),
                codebookSubsetRestriction1-r13   BIT STRING
            }                                        OPTIONAL,-- Cond
BeamformedKna
            codebookSubsetRestriction2-r13   BIT STRING        OPTIONAL,--
Cond NonPreCoded
            codebookSubsetRestriction3-r13   BIT STRING        OPTIONAL --
Cond BeamformedK1a
        }
        P-C-AndCBSR-PerResourceConfig-r13 ::=   SEQUENCE   (SIZE   (1..2))
OF P-C-AndCBSR-r13
            -- ASN1STOP
```

Alternatively, indication information may be added to a plurality of pieces of NZP CSI-RS resource information in one piece of information about a CSI process information element, to indicate that CSI configuration information indicated by the NZP CSI-RS resource information needs to correspondingly feed back only an RI and a PMI without the need of feeding back CQI. For example, csi-RS-ConfigNZPIDList-r11 in the following information elements indicates a plurality of pieces of NZP CSI-RS resource information, and pmi-ReportNZPList-r14 indicates which CSI configuration information indicated by the plurality of pieces of NZP CSI-RS resource information needs to feed back only an RI and a PMI without the need of feeding back CQI.

CSI-Process information elements

-- ASN1START

```
CSI-Process-r11 ::=        SEQUENCE {
    csi-ProcessId-r11        CSI-ProcessId-r11,
    csi-RS-ConfigNZPIdList-r11 SEQUENCE    (SIZE    (1..8))    OF
CSI-RS-ConfigNZPId-r11,
        pmi—ReportNZPList-r14    SEQUENCE(SIZE    (1..8))    OF
ENUMERATED {true,false}  OPTIONAL,-- Need OR
        csi-IM-ConfigId-r11        CSI-IM-ConfigId-r11,
        p-C-AndCBSRList-r11    SEQUENCE    (SIZE    (1..2))    OF
P-C-AndCBSR-r11,
        cqi-ReportBothProc-r11        CQI-ReportBothProc-r11
OPTIONAL,     -- Need OR
        cqi-ReportPeriodicProcId-r11 INTEGER (0..maxCQI-ProcExt-r11)
OPTIONAL,     -- Need OR
        cqi-ReportAperiodicProc-r11  CQI-ReportAperiodicProc-r11
OPTIONAL,     -- Need OR
        ...,
        [[    alternativeCodebookEnabledFor4TXProc-r12    ENUMERATED
{true}   OPTIONAL,-- Need ON
            csi-IM-ConfigIdList-r12        CHOICE {
            release                NULL,
            setup                SEQUENCE (SIZE (1..2)) OF
CSI-IM-ConfigId-r12
            }                        OPTIONAL,-- Need ON
            cqi-ReportAperiodicProc2-r12    CHOICE {
            release                NULL,
            setup                CQI-ReportAperiodicProc-r11
```

```
            }                                              OPTIONAL -- Need ON
       ]],
       [[    cqi-ReportAperiodicProc-r13         CQI-ReportAperiodicProc-r13
OPTIONAL,        -- Need ON
            cqi-ReportAperiodicProc2-r13              CHOICE {
                 release                         NULL,
                 setup                           CQI-ReportAperiodicProc-r13
            }                                         OPTIONAL,      -- Need ON
            eMIMO-Type-r13                      CHOICE {
                 release                         NULL,
                 setup                           CHOICE {
                      nonPrecoded-r13
CSI-RS-InfoNonPrecoded-r13,
                      beamformed-r13        CSI-RS-InfoBeamformed-r13
                 }
            }                                              OPTIONAL -- Need ON
       ]]
       }
       P-C-AndCBSR-r11 ::= SEQUENCE {
       p-C-r11                     INTEGER (-8..15),
            codebookSubsetRestriction-r11     BIT STRING
       }
       P-C-AndCBSR-r13 ::= SEQUENCE {
       legacySet                        SEQUENCE {
            p-C-r11                     INTEGER (-8..15),
            codebookSubsetRestriction1-r13   BIT STRING
       }                               OPTIONAL,-- Cond BeamformedKna
       codebookSubsetRestriction2-r13   BIT STRING           OPTIONAL,--
Cond NonPreCoded
       codebookSubsetRestriction3-r13   BIT STRING           OPTIONAL --
Cond BeamformedK1a
       }
       P-C-AndCBSR-PerResourceConfig-r13 ::=   SEQUENCE  (SIZE  (1..2))
OF P-C-AndCBSR-r13
```

```
        -- ASN1STOP
        }                                           OPTIONAL,-- Need OR
        ...,
        [[   eMIMO-Info-r13              CHOICE {
                release                  NULL,
                setup                    SEQUENCE {
                    nzp-resourceConfigList-r13    SEQUENCE    (SIZE
(2..8)) OF ResourceConfig-r13,
                    cdmType                          ENUMERATED
{cdm2, cdm4}   OPTIONAL -- Need OR
                }
            }                                        OPTIONAL -- Need ON
        ]]
        }
        ResourceConfig-r13 ::=              INTEGER (0..31)
        -- ASN1STOP
```

In the CSI feedback method provided in this embodiment of this application, the UE does not need to feed back CSI corresponding to all configured CSI configuration information. This may reduce a quantity of resources needed for CSI feedback in coordination, and help the network device perform scheduling more effectively. Further, the CSI fed back by the UE is obtained through filtering at a UE side. This may improve scheduling efficiency of the CSI that is fed back for the network device.

An embodiment of this application further provides another CSI feedback method. A difference between the foregoing method and this method lies in that the M groups of CSI configuration information in S101 do not include the CSI configuration information corresponding to the serving cell of the user equipment, where M is an integer greater than or equal to 1. Correspondingly, in S102, N groups of CSI do not include the CSI corresponding to the CSI configuration information of the serving cell, and N is an integer greater than or equal to 0 but not greater than M. Therefore, when the indication information in S103 uses a bitmap form, the indication information includes M groups of bits, each group of bits includes at least one bit, and each group of bits indicates whether CSI corresponding to one group of CSI configuration information in the M groups of CSI configuration information is fed back by the user equipment. Correspondingly, the manner in which the UE determines the N groups of CSI that need to be fed back does not include feeding back CSI corresponding to the CSI configuration information of the serving cell of the UE, and does not include a solution in which the CSI corresponding to the CSI configuration information of the serving cell of the UE is used as the reference CSI. Other solutions are still used, such as reporting one group of CSI indicating best channel quality in the M groups of CSI corresponding to the M groups of CSI configuration information, and/or comparing the reference CSI with M-1 groups of CSI corresponding to other M-1 groups of CSI configuration information. For description of other aspects in the CSI feedback method, refer to description in the foregoing CSI feedback method.

In the foregoing CSI feedback method, specifically, reporting the indication information that is used to indicate the N groups of CSI configuration information corresponding to the N groups of CSI and reporting the N groups of CSI may be performed in one or a combination of the following manners:

Manner 1) Transmission by using a PUCCH (physical uplink control channel).

A PUCCH format may be defined to transmit the indication information. For example, a PUCCH format 6 is defined and corresponding to indication information feedback when a plurality of cells (or TPs) are measured.

In time domain, the UE may first use the PUCCH format 6 to transmit the indication information, and then use a PUCCH format 2, 2a, or 2b to transmit CSI indicated by the indication information. Alternatively, the PUCCH format 2, 2a, or 2b may be used to transmit CSI, and then the PUCCH format 6 is used to transmit indication information corresponding to the CSI. At a network device side, the network device processes CSI depending on indication information indicating the CSI.

The CSI configuration information may be used to indicate that feedback of the indication information is periodic (which may be consistent with a CSI feedback period), or other information may be used to indicate that feedback of the indication information is periodic.

Optionally, for a period configuration of the indication information, signaling (as follows), for example, bitmap-indicator-ConfigIndex, may be added to signaling indicating an existing CQI feedback period, so as to indicate a feedback period of the indication information.

```
CQI-ReportPeriodic ::=        CHOICE {
        release                        NULL,
        setup                          SEQUENCE {
                cqi-PUCCH-ResourceIndex              INTEGER (0..1185),
                cqi-pmi-ConfigIndex                  INTEGER (0..1023),
                bitmap-indicator-ConfigIndex    INTEGER              (0..1023),
        OPTIONAL, -- Need OR
                cqi-FormatIndicatorPeriodic          CHOICE {
                        widebandCQI                          NULL,
                        subbandCQI                           SEQUENCE {
                                k                                    INTEGER (1..4)
                        }
                },
                ri-ConfigIndex                       INTEGER        (0..1023)
        OPTIONAL, -- Need OR
                simultaneousAckNackAndCQI                  BOOLEAN
        }
}
```

A time domain resource for feeding back the indication information may be obtained based on $N_{pd}$ and $N_{OFFSET,Indicator}$, where $N_{pd}$ is a feedback period of the indication information, and $N_{OFFSET,Indicator}$ is an offset between a start location of the time domain resource and a start location of a subframe. For example, a radio frame number is $n_f$, a timeslot number is $n_s$, and when a formula $(10 \times n_f + \lfloor n_s/2 \rfloor - N_{OFFSET,Indicator}) \bmod(N_{pd}) = 0$ is met, a resource starting from $N_{OFFSET,Indicator}$ in the timeslot is used to transmit the indication information.

Specifically, $N_{pd}$ and $N_{OFFSET,Indicator}$ may be predefined by using a protocol, or may be configured by using the network device, or may be configured in an indirect manner. If the network device configures a parameter related to $N_{pd}$ and $N_{OFFSET,Indicator}$, for example, $I_{Indicator}$, the user equipment may obtain corresponding values of $N_{pd}$ and $N_{OFFSET,Indicator}$ based on a preset relationship between $N_{pd}$, $N_{OFFSET,Indicator}$, and $I_{Indicator}$ (an optional way is shown in the following table). $I_{Indicator}$ may be configured by the network device based on an actual situation. For example, when a moving speed of the UE is high, correspondingly, a value of $I_{Indicator}$ may be relatively small, or when a moving speed of the UE is low, correspondingly, a value of $I_{Indicator}$ may be relatively large.

| $I_{Indicator}$ | Value of $N_{pd}$ | Value of $N_{OFFSET,Indicator}$ |
|---|---|---|
| $0 \leq I_{Indicator} \leq 1$ | 2 | $I_{Indicator}$ |
| $2 \leq I_{Indicator} \leq 6$ | 5 | $I_{Indicator} - 2$ |
| $7 \leq I_{Indicator} \leq 16$ | 10 | $I_{Indicator} - 7$ |
| $17 \leq I_{Indicator} \leq 36$ | 20 | $I_{Indicator} - 17$ |
| $37 \leq I_{Indicator} \leq 76$ | 40 | $I_{Indicator} - 37$ |
| $77 \leq I_{Indicator} \leq 156$ | 80 | $I_{Indicator} - 77$ |
| $157 \leq I_{Indicator} \leq 316$ | 160 | $I_{Indicator} - 157$ |
| $I_{Indicator} = 317$ | Reserved | |
| $318 \leq I_{Indicator} \leq 349$ | 32 | $I_{Indicator} - 318$ |
| $350 \leq I_{Indicator} \leq 413$ | 64 | $I_{Indicator} - 350$ |
| $414 \leq I_{Indicator} \leq 541$ | 128 | $I_{Indicator} - 414$ |
| $542 \leq I_{Indicator} \leq 1023$ | Reserved | |

Optionally, the feedback period of the indication information may be obtained based on the CQI feedback period without adding extra signaling. For example, the feedback period of the indication information may be the same as the CQI feedback period such as a wideband CQI period or a subband CQI period. A specific CQI feedback period may be obtained in an existing manner or may be obtained in another manner. Details are not described herein.

Optionally, in frequency domain, a PUCCH in the PUCCH format 6 may be sent at two sides of an operating bandwidth. For example, one RB is occupied at each side of the operating bandwidth.

Manner 2) Transmission by using a PUSCH (physical uplink shared channel).

One of resources occupied by the PUSCH may be allocated to transmit the indication information. For example, one or more subcarriers, one or more symbols, or a time-frequency resource corresponding to a pattern (pattern) may be allocated.

Based on manner 1) or 2), in time domain, the indication information and the CSI information may be reported in a same time unit, for example, in a same sub frame, or may be reported in different subframes. The UE may report corresponding indication information before reporting the CSI, or may first report the CSI and then report the corresponding indication information.

The N groups of CSI may be fed back in the following manners:

(1) If the M groups of CSI configuration information are configured in one piece of CSI process information, the UE may report the N groups of CSI information corresponding to the N groups of CSI configuration information in a same subframe. For example, an existing multi-CSI feedback format such as format4-MultiCSI-resourceConfiguration or format5-MultiCSI-resourceConfiguration may be used for reporting. A reporting period is a CSI reporting period predefined in a protocol or configured by the network device.

Alternatively, the N groups of CSI are transmitted in different subframes. For example, the N groups of CSI are reported in ascending order of identifiers (ID) of the corresponding N groups of CSI configuration information (for example, NZP CSI-RS ID or CSI-IM ID). Optionally, the indication information is reported before the N groups of CSI are reported. If the indication information indicates that CSI corresponding to one group of CSI configuration information is not reported, CSI corresponding to an ID of a next group of CSI configuration information that needs to be fed back and that is indicated in the indication information may be reported in a corresponding subframe used to report the group of CSI. Alternatively, the UE does not transmit information in the corresponding subframe, and the network device schedules another UE for information transmission (the network device learns, by using the indication information, that the UE does not perform reporting, and therefore, the network device can schedule another UE for transmission).

(2) If the M groups of CSI configuration information are configured by using a plurality of CSI processes, there may be two manners:

(2.1) The UE reports the N groups of CSI corresponding to the N groups of CSI configuration information according to the CSI period.

The N groups of CSI are reported in a same subframe. For example, an existing form such as format4-MultiCSI-resourceConfiguration or format5-MultiCSI-resourceConfiguration may be used for reporting.

(2.2) The UE reports the N groups of CSI corresponding to the N groups of CSI configuration information according to the period of the indication information used to indicate the N groups of CSI configuration information corresponding to the N groups of CSI, and the N groups of CSI information may be reported in a same subframe. For example, an existing form such as format4-MultiCSI-resourceConfiguration or format5-MultiCSI-resourceConfiguration may be used for reporting.

Specifically, for resource configuration methods in format 4 and format 5, refer to a manner in an existing protocol as follows:

```
PUCCH-ConfigDedicated-v13xy ::=        SEQUENCE {
    spatialBundlingPUCCH                BOOLEAN,
    spatialBundlingPUSCH                BOOLEAN,
    harq-TimingTDD                         BOOLEAN,
    codebooksizeDetermination-r13       INTEGER(0..1),
    maximumPayloadCoderate-r13            INTEGER (0..7),
    pucch-Format-r13                    CHOICE {
        format4-r13                        SEQUENCE {
            format4-resourceConfiguration        SEQUENCE  (SIZE
(4)) OF Format4-resource-r13,
            format4-MultiCSI-resourceConfiguration  SEQUENCE  (SIZE
(1..2)) OF Format4-resource-r13 OPTIONAL    -- Need OR
        },
        format5-r13            SEQUENCE {
            format5-resourceConfiguration        SEQUENCE  (SIZE
(4)) OF Format5-resource-r13,
            format5-MultiCSI-resourceConfiguration  SEQUENCE  (SIZE
(1..2)) OF Format5-resource-r13 OPTIONAL    -- Need OR
        }
    }                                           OPTIONAL -- Need OR
}
Format4-resource-r13  ::=         SEQUENCE {
    startingPRB-format4-r13                  INTEGER (0..109),
```

```
        numberOfPRB-format4-r13              INTEGER (0..7)

    }

Format5-resource-r13   ::=              SEQUENCE {

    startingPRB-format5-r13              INTEGER (0..109),

    cdm-index-format5-r13                INTEGER (0..1)

    }
```

In manner 2.1 or 2.2, the UE may use different subframes to transmit the N groups of CSI, instead of transmitting the N groups of CSI in a same subframe. For example, reporting is performed in ascending order of CSI process IDs. Optionally, corresponding indication information may be reported before the CSI is reported. If the indication information indicates that CSI corresponding to one group of CSI configuration information is not reported, CSI corresponding to an ID of a next group of CSI configuration information that needs to be fed back and that is indicated in the indication information may be reported in a corresponding subframe used to report the group of CSI. Alternatively, the UE does not transmit information in the corresponding subframe, and the network device schedules another UE for information transmission (the network device learns, by using the indication information, that the UE does not perform reporting, and therefore, the network device can schedule another UE for transmission).

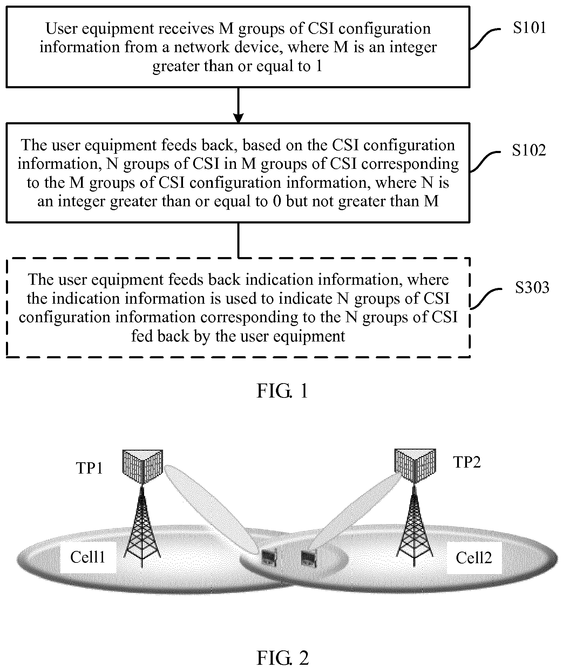

FIG. 2 is a schematic diagram of a scenario to which an embodiment of this application is applied. A first transmission point TP 1, a second transmission point TP 2, a cell 1 managed by the TP 1, a cell 2 managed by the TP 2, UE 1, and UE 2 are included in this scenario.

Based on a same technical conception, an embodiment of this application further provides an apparatus configured for CSI feedback. The apparatus may be user equipment described in the foregoing method or another device that can implement actions of the user equipment in the foregoing method.

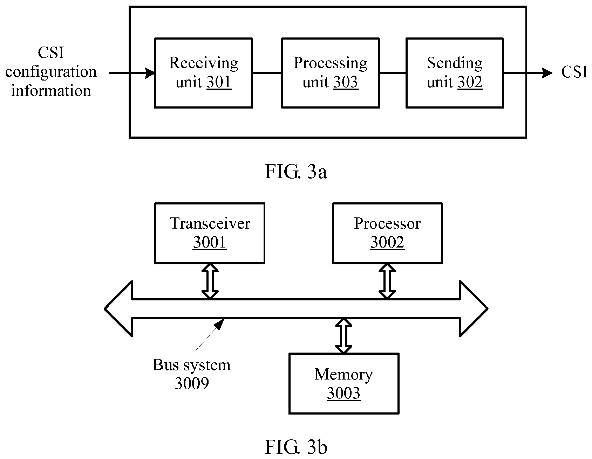

FIG. 3a and FIG. 3b are schematic structural diagrams of an apparatus configured for channel state feedback (or referred to as channel state information feedback) according to an embodiment of the present invention. As shown in FIG. 3a, the apparatus may include a receiving unit 301, a sending unit 302, and a processing unit 303.

The receiving unit 301 may be configured to perform a receiving action performed by the user equipment described in the foregoing method.

The sending unit 302 may be configured to perform a sending action performed by the user equipment described in the foregoing method.

The processing unit 303 may be configured to: perform corresponding processing described in the foregoing method on a signal received by the receiving unit 301, and/or perform corresponding processing described in the foregoing method on a signal to be sent by the sending unit 302, and send the signal by using the sending unit 302.

The receiving unit 301 and the sending unit 302 may be implemented by using a transceiver 3001 in FIG. 3b. The processing unit 303 may be implemented by using a processor 3002, or may be implemented by using a processor 3002 and a memory 3003.

For details, refer to description in the foregoing method. Details are not described herein again.

For example, the receiving unit 301 may be configured to receive M groups of CSI configuration information from a network device, where M is an integer greater than or equal to 1.

The processing unit 303 may be configured to feed back, based on the CSI configuration information by using the sending unit 302, N groups of CSI in M groups of CSI corresponding to the M groups of CSI configuration information, where N is an integer greater than or equal to 0 but not greater than M.

Correspondingly, as shown in FIG. 3b, the apparatus may include the transceiver 3001 and the processor 3002. The processor 3002 is configured to control operations of the apparatus, including performing data transmission (including receiving and/or sending data) by using the transceiver 3001. Further, the apparatus may further include the memory 3003. The memory 3003 may include a read-only memory and a random access memory, configured to provide an instruction and data for the processor 3002. The memory 3003 may be integrated in the processor 3002 or may be separated from the processor 3002. A part of the memory 3003 may further include a non-volatile random access memory (NVRAM). Components of the apparatus are coupled together by using a bus system. In addition to a data bus, the bus system 3009 includes a power bus, a control bus, and a status signal bus. However, for clear description, various types of buses in the figure are marked as the bus system 3009.

The procedure disclosed in this embodiment of this application may be applied to the processor 3002, or may be implemented by the processor 3002. In an implementation process, the steps of the procedure implemented by the apparatus may be performed by using an integrated logic circuit of hardware in the processor 3002 or an instruction in the form of software. The processor 3002 may be a general processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The universal processor may be a microprocessor or any conventional processor or the like. The steps of the method disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory 3003, and the processor 3002 reads information in the memory 3003 and performs the steps of procedures indicated by the embodiments of the present invention in combination with hardware of the processor.

Further, when the apparatus is user equipment, the apparatus may further include an input device such as a keyboard, an output device such as a display screen, and other structures. Details are not described herein.

Based on a same technical conception, an embodiment of the present invention further provides an apparatus configured for channel state feedback (or referred to as obtaining channel state information). The apparatus may be a network device described in the foregoing method, or more specifically, may be a transmission point such as a base station, or may be a device that can implement corresponding functions of the network device described in the foregoing method.

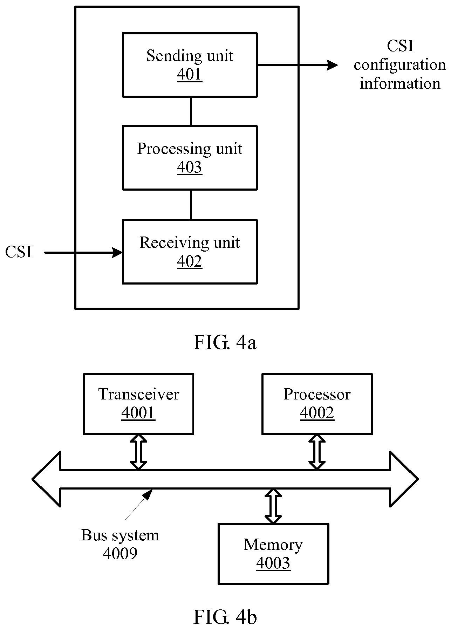

FIG. 4a and FIG. 4b are schematic structural diagrams of an apparatus configured for channel state feedback according to an embodiment of the present invention. As shown in FIG. 4a, the apparatus may include a sending unit 401, a receiving unit 402, and a processing unit 403.

The sending unit 401 may be configured to perform a sending action performed by the network device described in the foregoing method.

The receiving unit 402 may be configured to perform a receiving action performed by the network device described in the foregoing method.

The processing unit 403 may be configured to: perform corresponding processing described in the foregoing method on a signal received by the receiving unit 402, and/or perform corresponding processing described in the foregoing method on a signal to be sent by the sending unit 401, and send the signal by using the sending unit 401.

The receiving unit 402 and the sending unit 401 may be implemented by using a transceiver 4001 in FIG. 4b. The processing unit 403 may be implemented by using a processor 4002, or may be implemented by using the processor 4002 and a memory 4003.

For details, refer to description in the foregoing method. Details are not described herein again.

For example, the sending unit 401 may be configured to send M groups of CSI configuration information to the user equipment, where M is an integer greater than or equal to 1.

The receiving unit 402 may be configured to receive, from the user equipment, N groups of CSI in M groups of CSI corresponding to the M groups of CSI configuration information, where N is an integer greater than or equal to 0 but not greater than M.

As shown in FIG. 4b, the network device may include the transceiver 4001, the processor 4002, and the memory 4003.

The processor 4002 is configured to control operations of the apparatus, including performing data transmission (including receiving and/or sending data) by using the transceiver 4001. The memory 4003 may include a read-only memory and a random access memory, configured to provide an instruction and data for the processor 4002. A part of the memory 4003 may further include a non-volatile random access memory (NVRAM). Components of the apparatus are coupled together by using a bus system. In addition to a data bus, the bus system 4009 includes a power bus, a control bus, and a status signal bus. However, for clear description, various types of buses in the figure are marked as the bus system 4009.

The procedure disclosed in this embodiment of this application may be applied to the processor 4002, or may be implemented by the processor 4002. In an implementation process, the steps of the procedure implemented by the apparatus may be performed by using an integrated logic circuit of hardware in the processor 4002 or an instruction in the form of software. The processor 4002 may be a general processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The universal processor may be a microprocessor or any conventional processor or the like. The steps of the method disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory 4003, and a processor 4002 reads information in the memory 4003 and performs the steps of procedures indicated by the embodiments of the present invention in combination with hardware of the processor.

When the network device is a base station, the network device may further include a communications interface module, configured to communicate with another base station or network element, for example, a network element in a core network.

An embodiment of this application further provides a system, including the foregoing apparatus configured for CSI feedback and the apparatus configured for obtaining CSI. The system may be a communications system or may be another system.

Content reported by UE meets a threshold requirement by using the method in this embodiment of this application. Only neighboring cell interference meeting the threshold requirement can be reported when the UE reports neighboring cell interference (or neighboring cell channel state). Therefore, the UE determines intensity (or quality) of the neighboring cell interference (or neighboring cell channel quality) with the assistance of the threshold. This helps a base station of a current cell exclude weak interference useless to scheduling by the serving base station (or provide information about a relatively good coordination point for coordinated transmission). This reduces feedback overheads, and helps the serving base station (a base station to which the serving cell belongs) execute a scheduling algorithm more effectively.

In addition, a quantity of strongest interference that can be reported by a neighboring cell (a quantity of channels having best channel quality) is predefined or preconfigured. This standardizes UE behavior, avoids malicious UE, and reduces a UE feedback quantity.

The reported neighboring cell interference includes an RI and a PMI that are measured by the UE for a channel from the UE to the base station in the neighboring cell, and does not include CQI information. Compared with the prior art of reporting all measurement information, this method reduces CQI feedback overheads.

It should be understood that "an embodiment" or "an embodiment" mentioned in the whole specification means that particular features, structures, or characteristics related to the embodiment are included in at least one embodiment of the present invention. Therefore, "in an embodiment" or "in an embodiment" appearing throughout the specification does not refer to a same embodiment. In addition, these particular features, structures, or characteristics may be combined in one or more embodiments by using any appropriate manner. Sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of this application, "B corresponding to A" indicates that B is associated with A, and B may be determined according to A. However, it should further be understood that determining B according to A does not mean that B is determined according to A only; that is, B may also be determined according to A and/or other information. In the embodiments of this application, "at least one of A, B, and C" represents selecting at least one from a set (A, B, and C), for example, A, B, and C, A and B, A and C, B and C, or respectively A, B, and C. Description such as "a first A" and "a second A" in the embodiments of this application is merely used to distinguish between a plurality of As, and is not used to represent other meanings.

A person of ordinary skill in the art may be aware that, in combination with the optional ways described in the embodiments disclosed in this specification, units and algorithm steps may be implemented by electronic hardware, computer software, or a combination thereof. To clearly describe the interchangeability between the hardware and the software, the foregoing has generally described compositions and steps of each optional way according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an optional way. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some transceivers. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. A part or all of the units may be selected according to actual requirements to achieve the objectives of the solutions of the embodiments of the present invention.

In addition, functional units in the embodiments of the present invention may be integrated into one processor, or each of the units may exist alone physically, or two or more units are integrated into one unit. The integrated unit may be implemented in a form of hardware, or may be implemented in a form of a software functional unit.

With descriptions of the foregoing implementations, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an optional way but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital STA line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely embodiments of the technical solutions of the present invention, but is not intended to limit the protection scope of the present invention. Any modification, equivalent replacement, or improvement made without departing from the spirit and principle of the present invention shall fall within the protection scope of the present invention.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device, so that the instructions executed by the computer or the processor of any other programmable data processing device may implement a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although available embodiments of the present invention have been described, a person skilled in the art can make changes and modifications to these embodiments once they learn the basic inventive concept. Therefore, the following claims are intended to be construed as to cover the optional embodiments and all changes and modifications falling within the scope of the present invention.

**Claims**

1. A channel state feedback method, comprising:

   receiving M groups of channel state information (CSI) configuration information from a network device, wherein M is an integer greater than or equal to 1, the M groups of CSI configuration information comprise CSI configuration information corresponding to a serving cell of user equipment, or the M groups of CSI configuration information do not comprise CSI configuration information corresponding to a serving cell of user equipment; and
   feeding back, based on the CSI configuration information, N groups of CSI in M groups of CSI corresponding to the M groups of CSI configuration information; wherein
   when the M groups of CSI configuration information comprise the CSI configuration information corresponding to the serving cell of the user equipment, N is an integer greater than or equal to 0 but not greater than M; or
   when the M groups of CSI configuration information do not comprise the CSI configuration information corresponding to the serving cell of the user equipment, the N groups of CSI do not comprise CSI corresponding to the CSI configuration information of the serving cell, and N is an integer greater than or equal to 0 but not greater than M.

2. The method according to claim 1, wherein the method further comprises:
   feeding back indication information, wherein the indication information is used to indicate N groups of CSI configuration information corresponding to the N groups of CSI fed back by the user equipment.

3. The method according to claim 1 or 2, wherein the method further comprises:
   receiving, from the network device, information indicating a type of each group of CSI.

4. The method according to claims 1 to 3, wherein the method further comprises:
   receiving, from the network device, information indicating a quantity of CSI comprised in each group of CSI.

5. A channel state feedback method, comprising:

   sending M groups of channel state information (CSI) configuration information to user equipment, wherein M is an integer greater than or equal to 1, the M groups of CSI configuration information comprise CSI configuration information corresponding to a serving cell of the user equipment, or the M groups of CSI configuration information do not comprise CSI configuration information corresponding to a serving cell of the user equipment; and
   receiving N groups of CSI in M groups of CSI corresponding to the M groups of CSI configuration information from the user equipment; wherein
   when the M groups of CSI configuration information comprise the CSI configuration information corresponding to the serving cell of the user equipment, N is an integer greater than or equal to 1 but not greater than M; or
   when the M groups of CSI configuration information do not comprise the CSI configuration information corresponding to the serving cell of the user equipment, the N groups of CSI do not comprise CSI corresponding to the CSI configuration information of the serving cell, and N is an integer greater than or equal to 0 but not greater than M.

6. The method according to claim 5, wherein the method further comprises:
   receiving indication information from the user equipment, wherein the indication information is used to indicate N groups of CSI configuration information corresponding to the N groups of CSI fed back by the user equipment.

7. The method according to claim 5 or 6, wherein the method further comprises:
   sending, to the user equipment, information indicating a type of each group of CSI.

8. The method according to claims 5 to 7, wherein the method further comprises:
   sending, to the user equipment, information indicating a quantity of CSI comprised in each group of CSI.

9. The method according to claim 3 or 4 or claim 7 or 8, wherein the type of each group of CSI comprises a rank indicator (RI) and/or precoding matrix information (PMI); or
the type of each group of CSI comprises channel quality information (CQI) and a rank indicator and/or precoding matrix information.

10. The method according to claims 2 to 4 or claims 6 to 9, wherein the indication information comprises M groups of bits, each group of bits comprises at least one bit, and each group of bits indicates whether CSI corresponding to one group of CSI configuration information in the M groups of CSI configuration information is fed back by the user equipment.

11. The method according to claims 2 to 4 or claims 6 to 9, wherein when the M groups of CSI configuration information comprise the CSI configuration information corresponding to the serving cell of the user equipment, the indication information comprises M-1 groups of bits, each group of bits comprises at least one bit, and each group of bits indicates whether CSI corresponding to one group of CSI configuration information in M-1 groups of CSI configuration information other than the CSI configuration information of the serving cell in the M groups of CSI configuration information is fed back by the user equipment.

12. The method according to claim 10, wherein the N groups of CSI are fed back in a preset sequence, and the preset sequence is related to a sequence of the M groups of bits; or the N groups of CSI are fed back by being carried in N groups of resources in M groups of resources corresponding to the M groups of CSI, a sequence of the M groups of resources for the M groups of CSI is related to the sequence of the M groups of bits, and a resource other than the resources that are used to carry the N groups of CSI in the M groups of resources is not used to carry CSI.

13. The method according to claim 11, wherein the N groups of CSI are fed back in a preset sequence, and the preset sequence is related to a sequence of the M-1 groups of bits; or the N groups of CSI are fed back by being carried in N groups of resources in M-1 groups of resources corresponding to M-1 groups of CSI, a sequence of the M-1 groups of resources for the M-1 groups of CSI is related to the sequence of the M-1 groups of bits, and a resource other than the resources that are used to carry the N groups of CSI in the M-1 groups of resources is not used to carry CSI.

14. The method according to any one of claims 10 to 13, wherein a value of each group of bits indicates a quantity of CSI in one group of CSI corresponding to CSI configuration information corresponding to the group of bits.

15. The method according to claim 14, wherein the quantity of CSI is determined based on a quantity of CSI that needs to be fed back in each group of CSI configuration information, and the quantity of CSI that needs to be fed back in each group of CSI configuration information is predefined or is configured by using higher layer signaling or physical layer signaling.

16. The method according to claims 2 to 4 or claims 6 to 9, wherein the indication information comprises identification information of each group of CSI configuration information corresponding to each group of CSI in the N groups of CSI.

17. The method according to claim 16, wherein a feedback sequence of the N groups of CSI is related to a sequence of the identification information of the N groups of CSI configuration information corresponding to the N groups of CSI.

18. The method according to claims 1 to 4 or claims 9 to 17, wherein the feeding back, based on the CSI configuration information, N groups of CSI in M groups of CSI corresponding to the M groups of CSI configuration information comprises:
obtaining the corresponding M groups of CSI based on the M groups of CSI configuration information, and determining and feeding back the N groups of CSI in the M groups of CSI according to a determined rule.

19. The method according to claims 1 to 18, wherein types of the groups of CSI are the same or different, and the type of the CSI indicates that each group of CSI comprises one or a combination of an RI, a wideband or subband PMI, or CQI.

20. The method according to claim 19, wherein the information indicating the type of each group of CSI is carried in the CSI configuration information.

21. A channel state feedback apparatus, comprising a transceiver, a processor, and a memory, wherein:
the memory is configured to store an instruction, the processor is configured to execute the instruction stored in the memory to control the transceiver to receive and send a signal, and when the processor executes the instruction stored in the memory, the apparatus is configured to perform the method according to any one of claims 1 to 20.

22. A communications apparatus, wherein the communication apparatus is configured to perform the method according to any one of claims 1 to 20.

23. A computer readable storage medium, comprising a computer program, wherein when the computer program runs on a computer, the method according to any one of claims 1 to 20 is performed.

User equipment receives M groups of CSI configuration information from a network device, where M is an integer greater than or equal to 1 — S101

The user equipment feeds back, based on the CSI configuration information, N groups of CSI in M groups of CSI corresponding to the M groups of CSI configuration information, where N is an integer greater than or equal to 0 but not greater than M — S102

The user equipment feeds back indication information, where the indication information is used to indicate N groups of CSI configuration information corresponding to the N groups of CSI fed back by the user equipment — S303

FIG. 1

TP1                                    TP2

Cell1                                  Cell2

FIG. 2

CSI
configuration
information

→

Receiving
unit 301

Processing
unit 303

Sending
unit 302

→ CSI

FIG. 3a

Transceiver
3001

Processor
3002

Bus system
3009

Memory
3003

FIG. 3b

Sending unit
401

CSI
configuration
information

Processing unit
403

Receiving unit
402

CSI

FIG. 4a

Transceiver
4001

Processor
4002

Bus system
4009

Memory
4003

FIG. 4b

## INTERNATIONAL SEARCH REPORT

| International application No. |
| --- |
| PCT/CN2017/097146 |

### A. CLASSIFICATION OF SUBJECT MATTER

H04B 7/02 (2017.01) i

According to International Patent Classification (IPC) or to both national classification and IPC

### B. FIELDS SEARCHED

Minimum documentation searched (classification system followed by classification symbols)

H04W; H04B; H04Q

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE, 3GPP: 信道状态信息, 反馈, 开销, 多点协作, 多点协同, 多点协调, CSI, feedback, COMP, RI, PMI, CQI

### C. DOCUMENTS CONSIDERED TO BE RELEVANT

| Category* | Citation of document, with indication, where appropriate, of the relevant passages | Relevant to claim No. |
| --- | --- | --- |
| X | CN 102377469 A (ZTE CORP.), 14 March 2012 (14.03.2012), claims 1-17, and description, paragraph 0113 | 1-23 |
| X | CN 103546208 A (CHINA ACADEMY OF TELECOMMUNICATIONS TECHNOLOGY), 29 January 2014 (29.01.2014), claims 1-27 | 1-23 |
| A | WO 2012100587 A1 (ZTE CORP.), 02 August 2012 (02.08.2012), entire document | 1-23 |
| A | US 2012275420 A1 (HUAWEI TECHNOLOGIES CO., LTD.), 01 November 2012 (01.11.2012), entire document | 1-23 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31 August 2017 | 29 September 2017 |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer WANG, Yixuan Telephone No.: (86-10) 62413364 |
| --- | --- |

Form PCT/ISA/210 (second sheet) (July 2009)

## INTERNATIONAL SEARCH REPORT
### Information on patent family members

International application No.

PCT/CN2017/097146

| Patent Documents referred in the Report | Publication Date | Patent Family | Publication Date |
|---|---|---|---|
| CN 102377469 A | 14 March 2012 | WO 2012151988 A1 | 15 November 2012 |
| CN 103546208 A | 29 January 2014 | WO 2014008833 A1 | 16 January 2014 |
| WO 2012100587 A1 | 02 August 2012 | CN 102611487 A | 25 July 2012 |
| US 2012275420 A1 | 01 November 2012 | EP 2506449 A1 | 03 October 2012 |
| | | CN 102130708 A | 20 July 2011 |
| | | WO 2011085694 A1 | 21 July 2011 |

Form PCT/ISA/210 (patent family annex) (July 2009)